# EUROPEAN PATENT APPLICATION

(11) **EP 1 024 673 A2**
(43) Date of publication of application: **02.08.2000**
(21) Application number: 99310382.9
(22) Date of filing: 21.12.1999
(51) Int. Cl.: H04Q 3/00

(54) **Accessory resource arbitration for stimulus telephone**

(30) Priority: 30.12.1998 US 222882
(71) Applicant: Nortel Networks Corporation, Montreal, Quebec H2Y 3Y4 (CA)
(72) Inventor: Rogers, Shane Michael, Calgary, Alberta T2W 1Z9 (CA); Allan, William, Ottawa, Ontario K2A 2H2 (CA); Kuechler, Timothy Augustus, Calgary, Alberta T1Y 3R4 (CA); Elliott, James Brent, Calgary, Alberta T2L 2G4 (CA); David, Larry John, Constance Bay, Ontario K0A 3M0 (CA); Lee, Jackie Jia-Chyi, Fremont, California 94539 (US); Dirienzo, Guiseppe Joe, Clagary, Alberta T2K 3W2 (CA); Button, Lyle Robert, Clagary, Alberta T2Z 2N5 (CA); McIntyre, Stephen Joseph, Sittsville, Ontario K2S 1G9 (CA); Osborne, Roy Newton, Sittsville, Ontario K2S 1M1 (CA)
(74) Representative: Maury, Richard Philip

(57) **Abstract**

A method and apparatus for controlling resources in a telecommunications system having a plurality of controllable resources and a plurality of resource controllers for controlling the resources. The method includes the steps of receiving a message from a resource controller at a telecommunications apparatus and selectively routing the message to at least one of the resource controllers and to a controllable resource, according to a routing scheme dependent upon a property of the message.

## Description

### BACKGROUND OF THE INVENTION

### 1. Field of the Invention

The present invention relates to a terminal for use with common equipment, including a private branch exchange or a key service unit. More particularly, the invention relates to a stimulus telephone selectively having alternate or concurrent controllers.

### 2. Description of Related Art

A stimulus telephone is essentially a dumb terminal connected to common equipment. It is programmed to detect state changes in its hardware and to report such changes to the common equipment. It is also programmed to change the state of its hardware based upon instructions received from the common equipment.

In other words, the stimulus telephone reports key-press and hook-state events to the common equipment but has no understanding of the telecommunications significance of such events. Similarly, upon receiving appropriate commands from the common equipment, the stimulus telephone causes its ringer to ring, its display to display, and its handset to connect to an audio-path, all without understanding the telecommunications significance of such events.

A conventional stimulus telephone has one significant advantage: it is simple and cheap to manufacture. Its disadvantage is that, as a dumb terminal, its features can be modified only by reprogramming the common equipment. However, reprogramming the common equipment is a complicated process having system-wide consequences and therefore a long, rigorous development cycle. As a result, feature upgrades for stimulus telephones are implemented slowly, if at all.

It would therefore be advantageous to be able to modify the stimulus telephone from the terminal end, to avoid the complications inherent in the common equipment. The present invention is directed to such a solution.

### SUMMARY OF THE INVENTION

The present invention provides a way to upgrade a stimulus telephone without reprogramming the common equipment. The upgrade can either enhance the stimulus telephone's existing features or can extend the stimulus telephone's feature set to include new features.

According to one embodiment of the invention, a stimulus telephone has a set of externally accessible resources, including a keypad, a visual display, and an audio-path. The telephone is connectible to common equipment, such that the common equipment can observe and control the externally accessible resources.

However, the telephone also includes receptacles for receiving solid-state accessory cartridges. Upon being hot-plugged into the telephone, an accessory identifies itself to the common equipment to negotiate access to a subset of the telephone's externally accessible resources. For example, one accessory might seek to observe which keys have been pressed on the keypad whereas another accessory might seek to control the appearance the display.

This flexible access and control arrangement is implemented by embodying events and commands as digital messages that are routed among the common equipment, the stimulus telephone, and each accessory according to programmable routing tables resident at one or more of the common equipment, the stimulus telephone, and each accessory.

Thus, according to one embodiment of the invention, there is provided a method of controlling resources in a telecommunications system having a plurality of controllable resources and a plurality of resource controllers for controlling the resources. The method includes the steps of receiving a message from a resource controller at a telecommunications apparatus and selectively routing said message to at least one of the resource controllers and to a controllable resource, according to a routing scheme dependent upon a property of the message.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,
- Figure **1**: is a block diagram of a multiple event-handler system according to a first embodiment of the invention;
- Figure **2**: is a schematic representation of common equipment tables stored in common equipment shown in Figure **1**;
- Figures **3**: is a block diagram of a terminal shown in Figure **1**;
- Figure **4**: is a rear perspective view of the terminal;
- Figures **5**A, **5**B, **5**C and **5**D: are perspective views of various accessories with different keying configurations;
- Figure **6**: is a schematic representation of a message format of messages transferred between event-handlers in the system;
- Figure **7**: is a flowchart of a message receiver routine run by a processor in the terminal;
- Figure **8**: is an overview flowchart of a message routing routine run by the terminal;

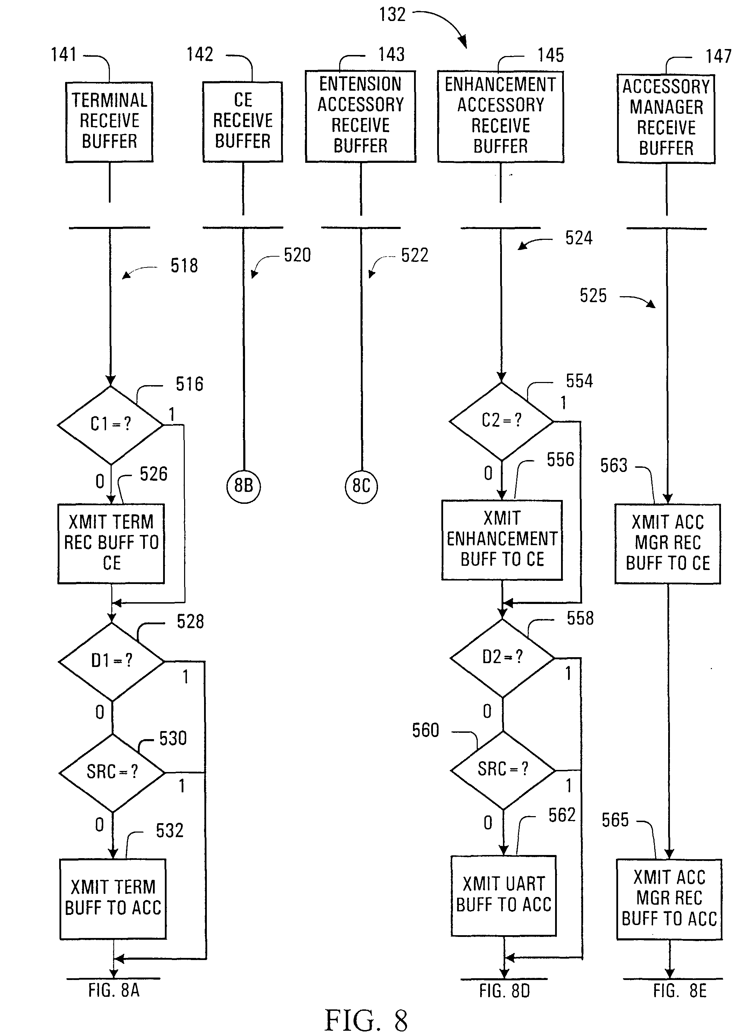

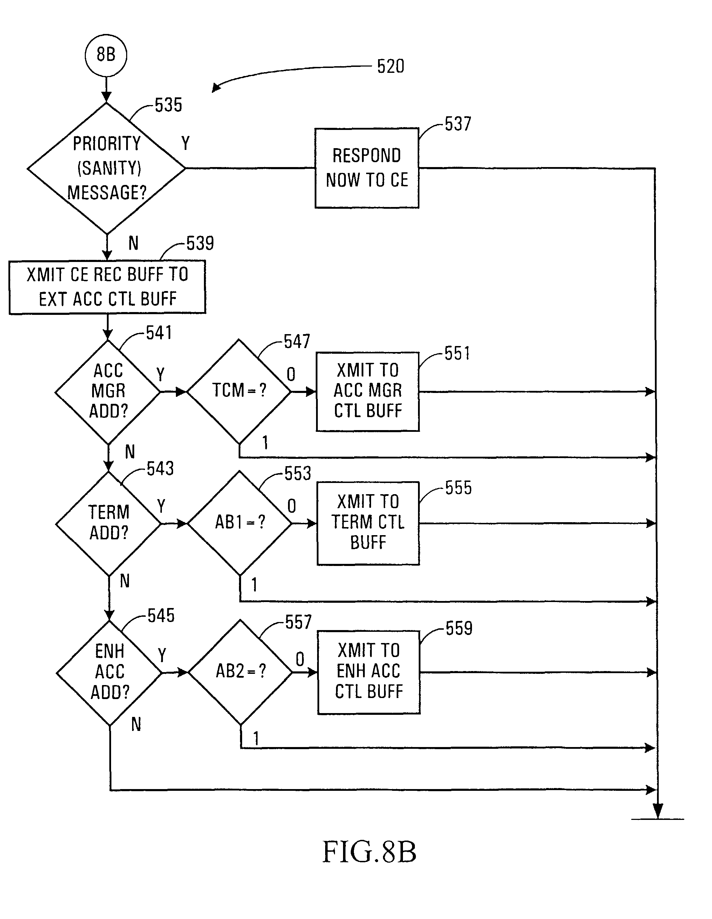

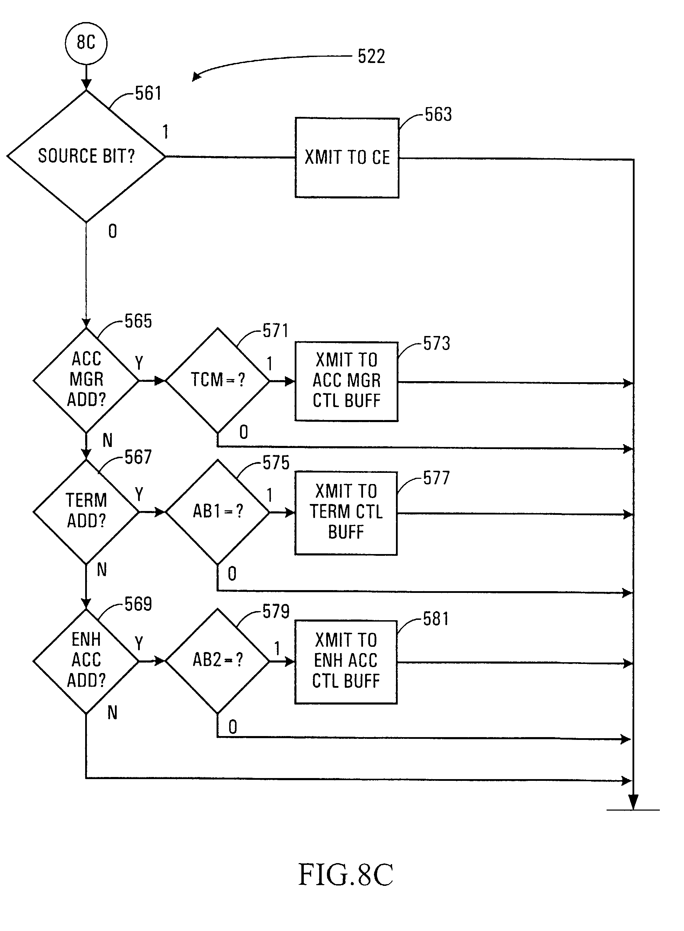

- Figure **8**A: is a flowchart of a terminal message routing routine run by the terminal;
- Figure **8**B: is a flowchart of a common equipment message routing routine run by the terminal;
- Figure **8**C: is flowchart of an extension-accessory message routing routine run by the terminal;
- Figure **8**D: is a flowchart of a enhancement-accessory message routing routine run by the terminal;
- Figure **8**E: is a flowchart of an accessory manager message routing routine run by the terminal;

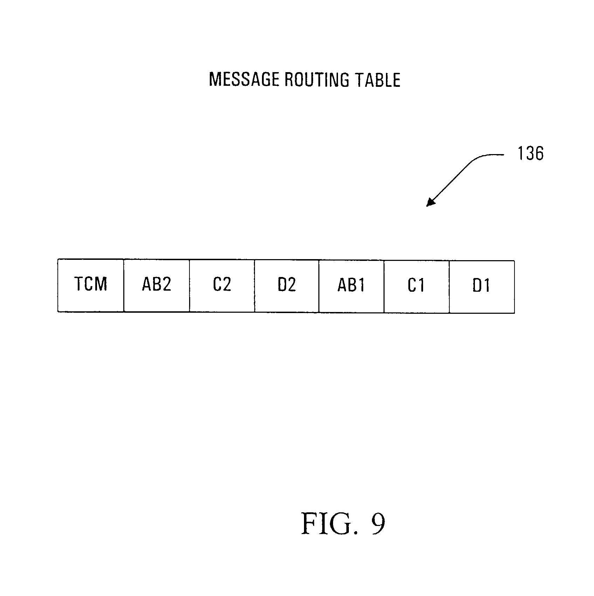

- Figure **9**: is a schematic representation of a message routing table maintained by the terminal;

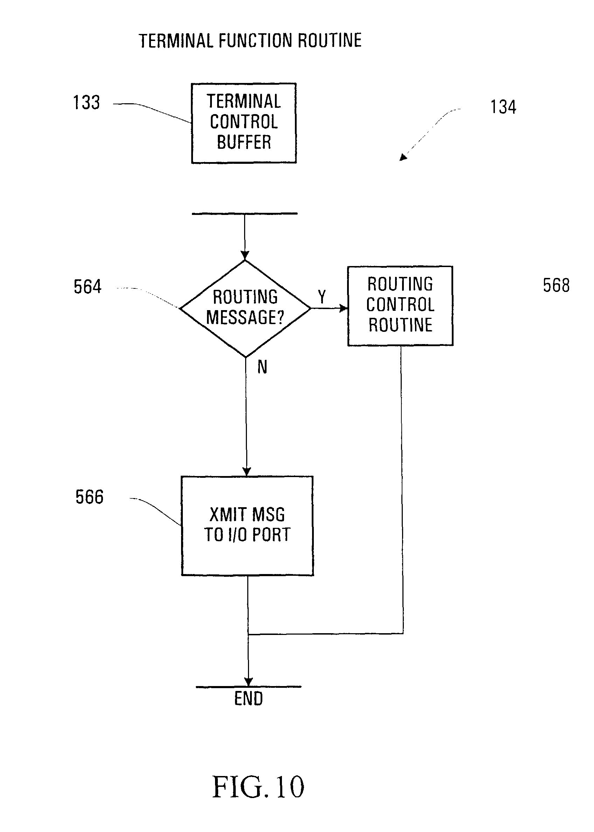

- Figure **10**: is flowchart of a terminal function routine run by the terminal;

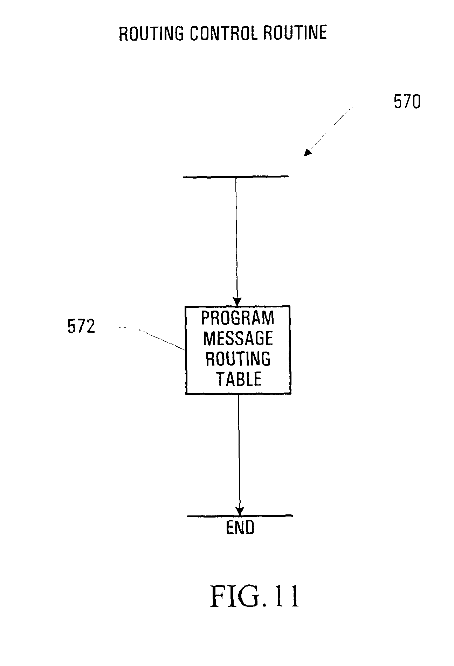

- Figure **11**: is a flowchart of a routing control routine run by the terminal;

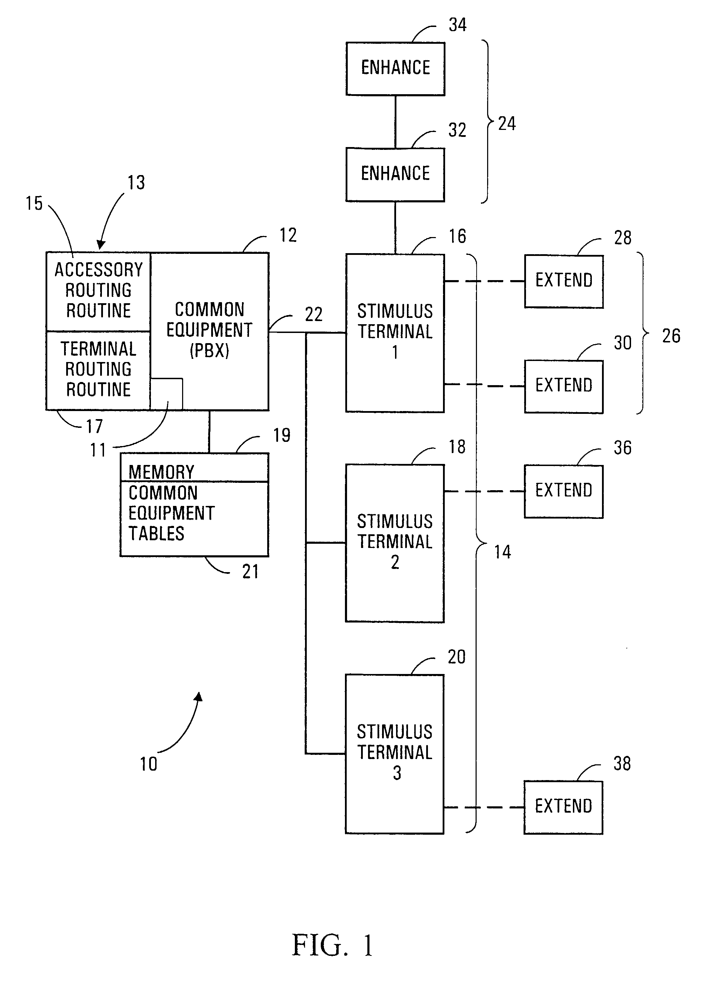

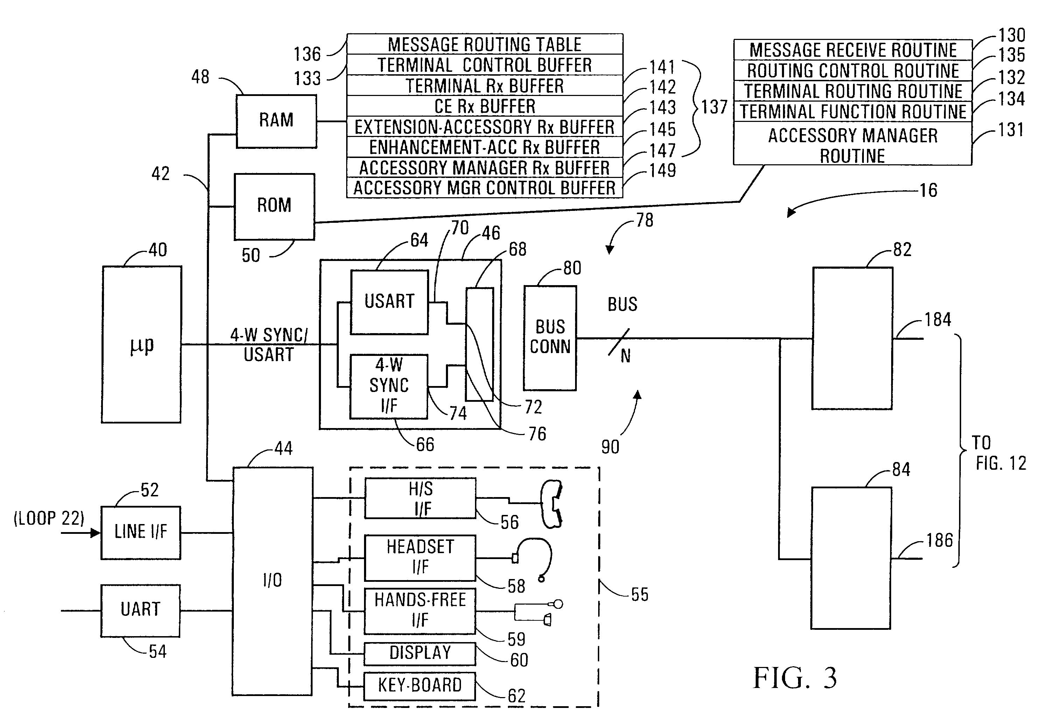

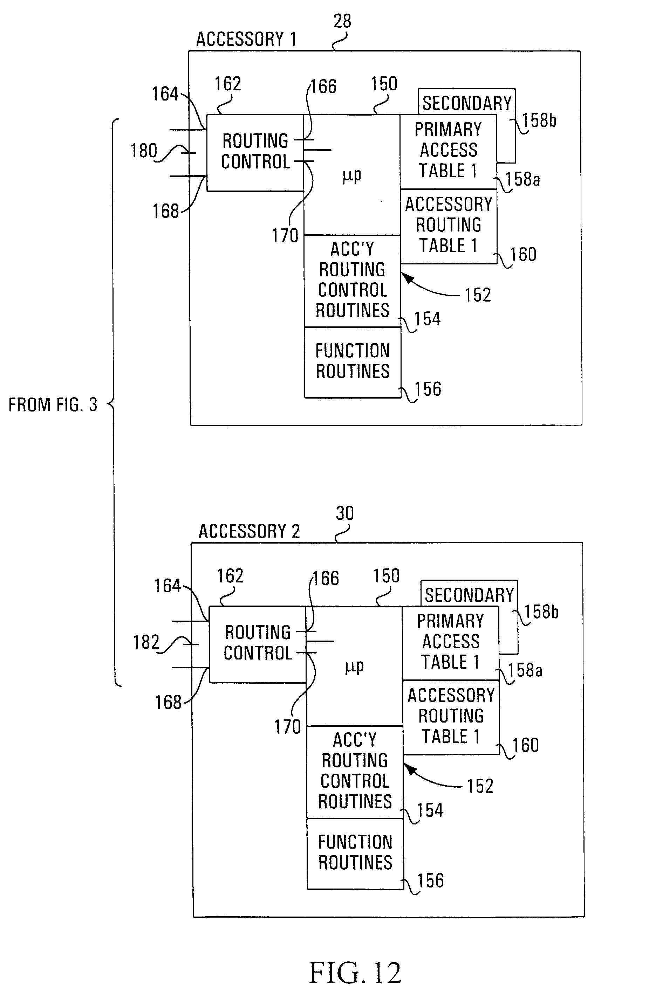

- Figure **12**: is a block diagram of two extension-accessories as shown in Figure **1** and connectible to the terminal equipment as shown in Figure **3**.

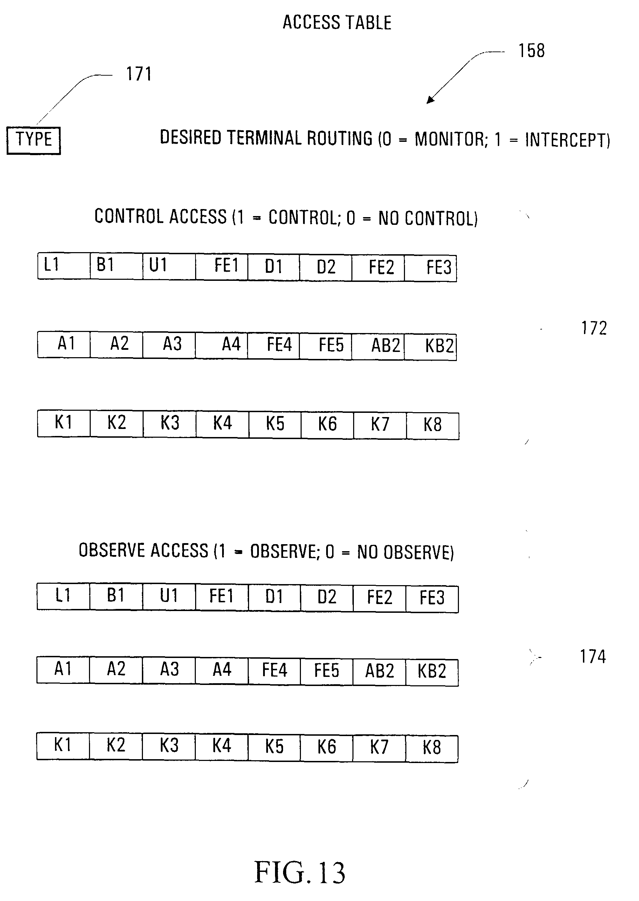

- Figure **13**: is a schematic representation of an access table stored in an extension-accessory connected to the terminal;

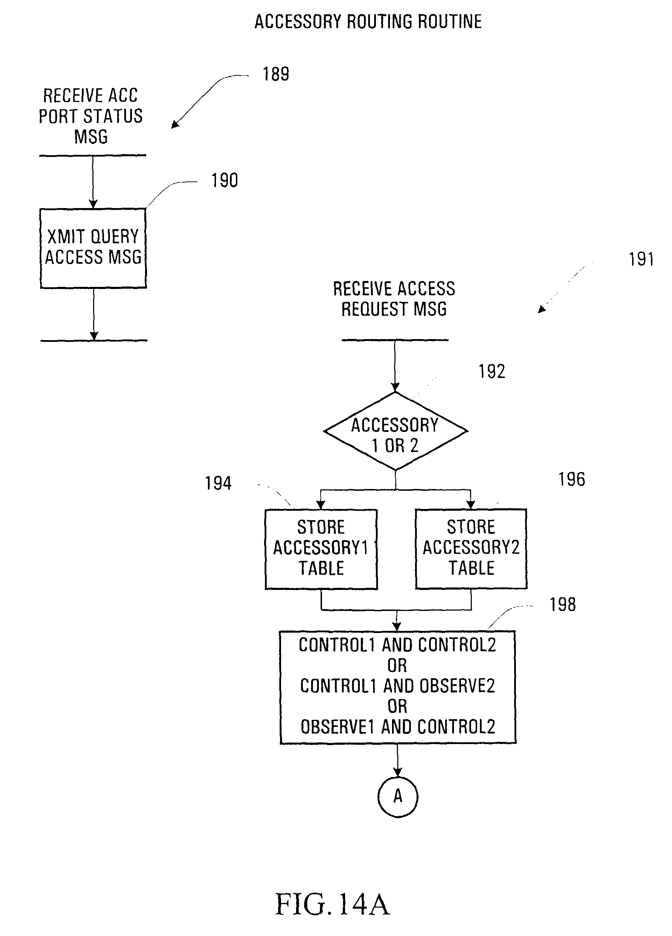

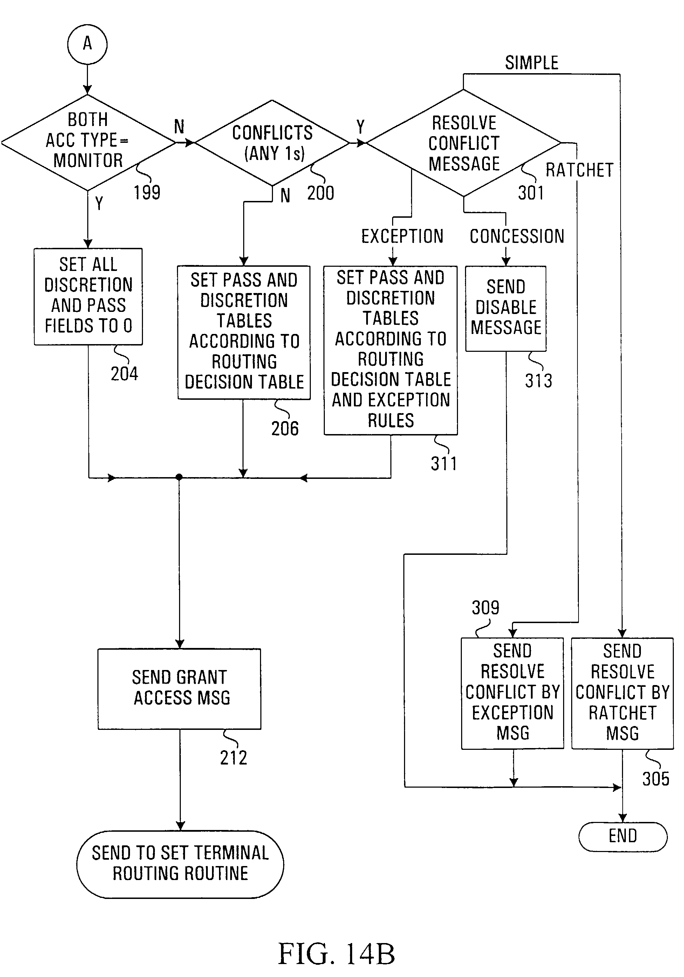

- Figure **14**A: is a flowchart of first and second portions of an extension-accessory routing routine run by the extension-accessory;
- Figure **14**B: is a continuation of the second portion of the flowchart representing the extension-accessory routing routine of Figure **14**A;

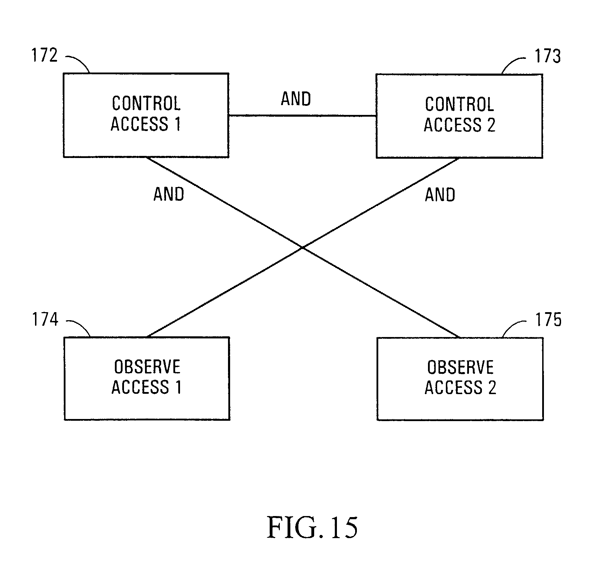

- Figure **15**: is a schematic representation of a boolean process implemented in a functional block of the extension-accessory routing routine shown in Figure **14**A;

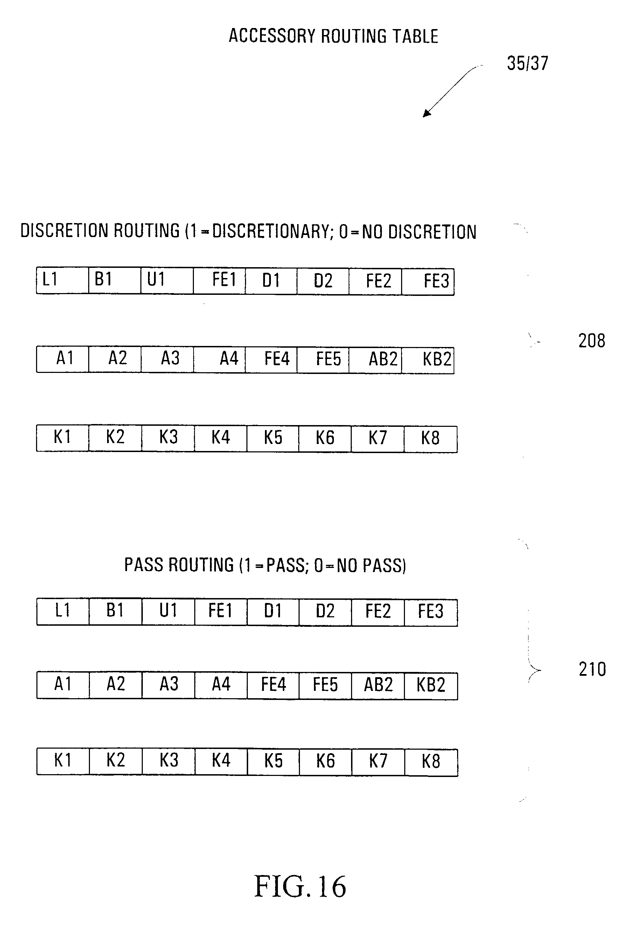

- Figure **16**: is a schematic representation of an extension-accessory routing table stored at the extension-accessory;

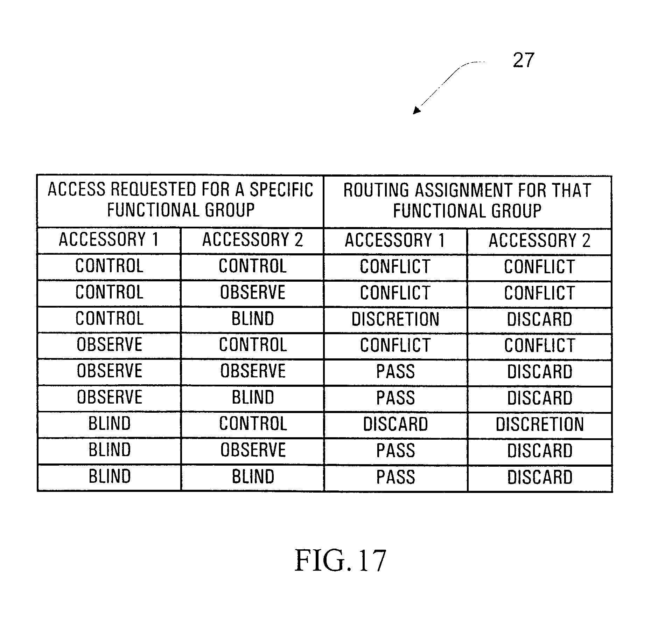

- Figure **17**: is a schematic representation of a routing assignment table stored at the common equipment shown in Figure **1**;

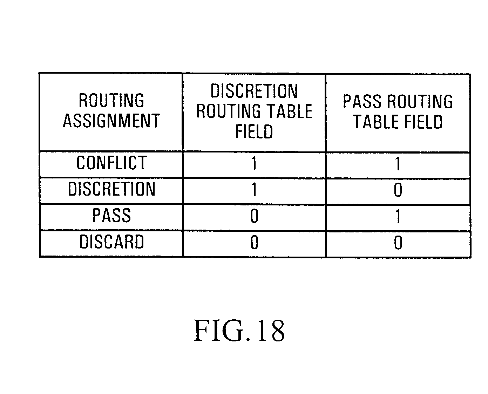

- Figure **18**: is a schematic representation of discretion routing table field contents and pass routing table field contents according to said routing assignment;

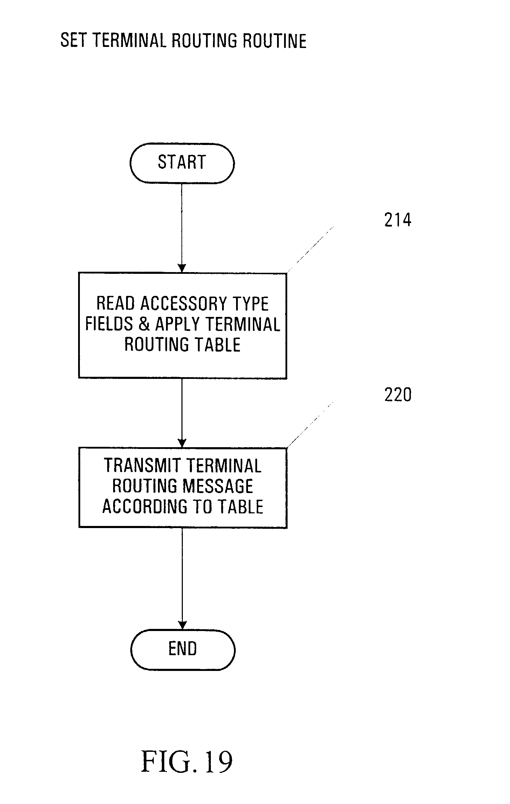

- Figure **19**: is a flowchart of a set terminal routing routine run by the common equipment;

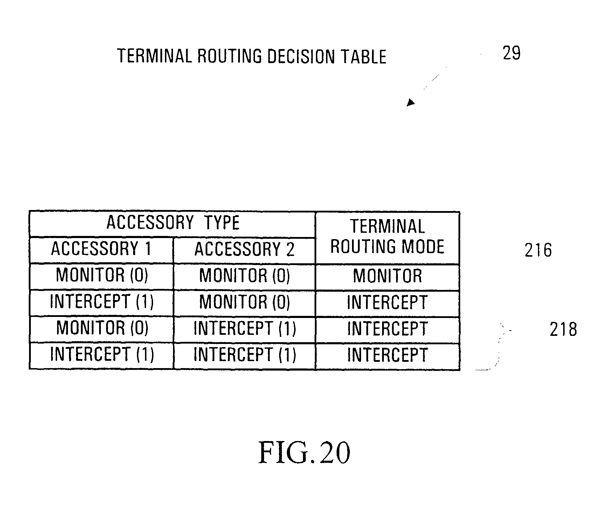

- Figure **20**: is a terminal routing decision table for selecting monitor or intercept modes according to extension-accessory type, the terminal routing decision table being stored at the common equipment;

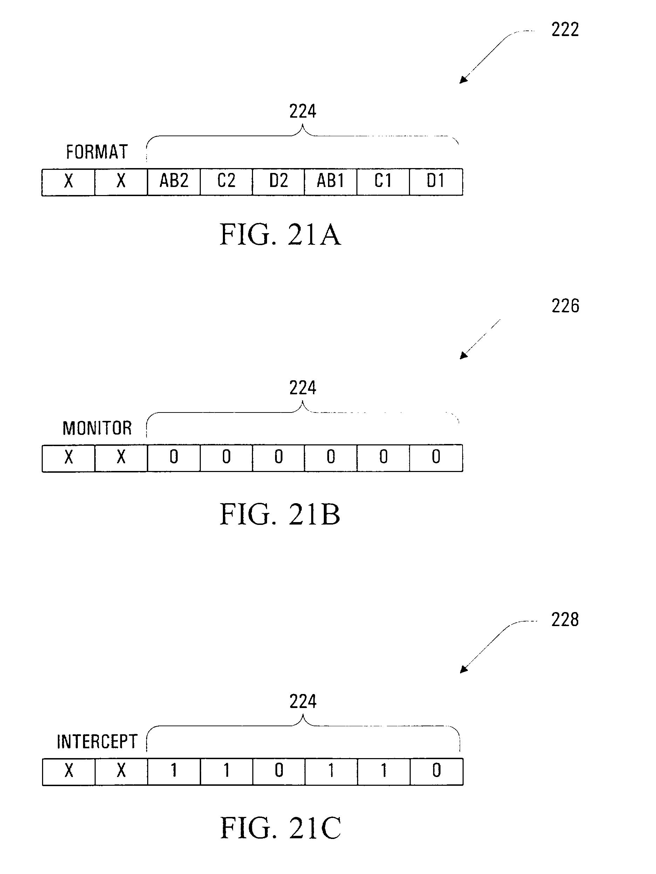

- Figure **21**A: is a schematic representation of a general formatting message format;
- Figure **21**B: is a schematic representation of a monitor routing message format;
- Figure **21**C: is a schematic representation of an intercept routing message format;

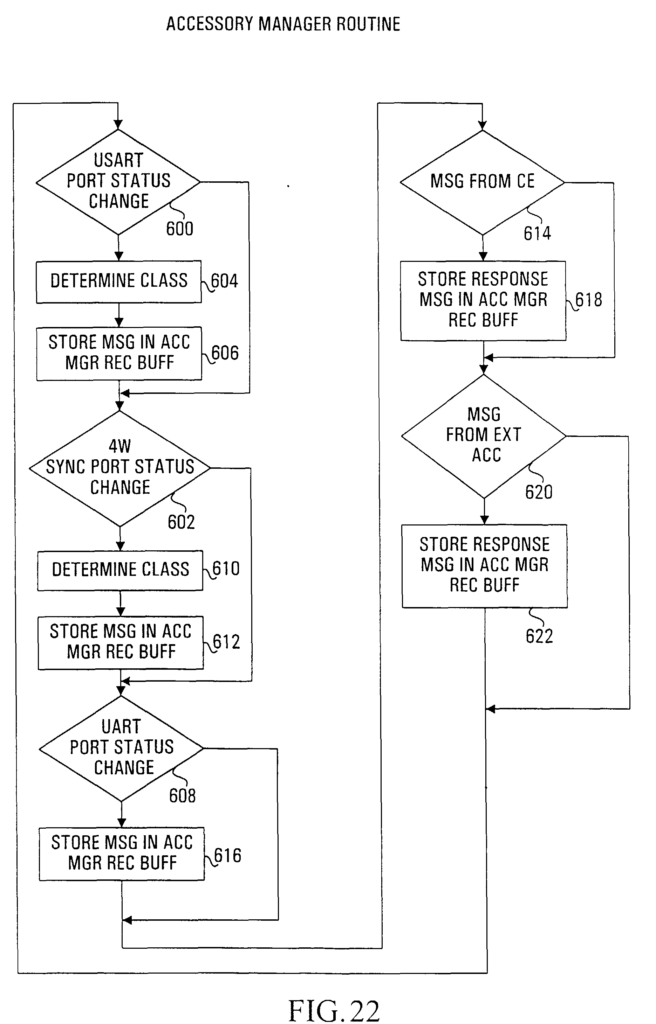

- Figure **22**: is a flowchart of an accessory manager routine run by the terminal.

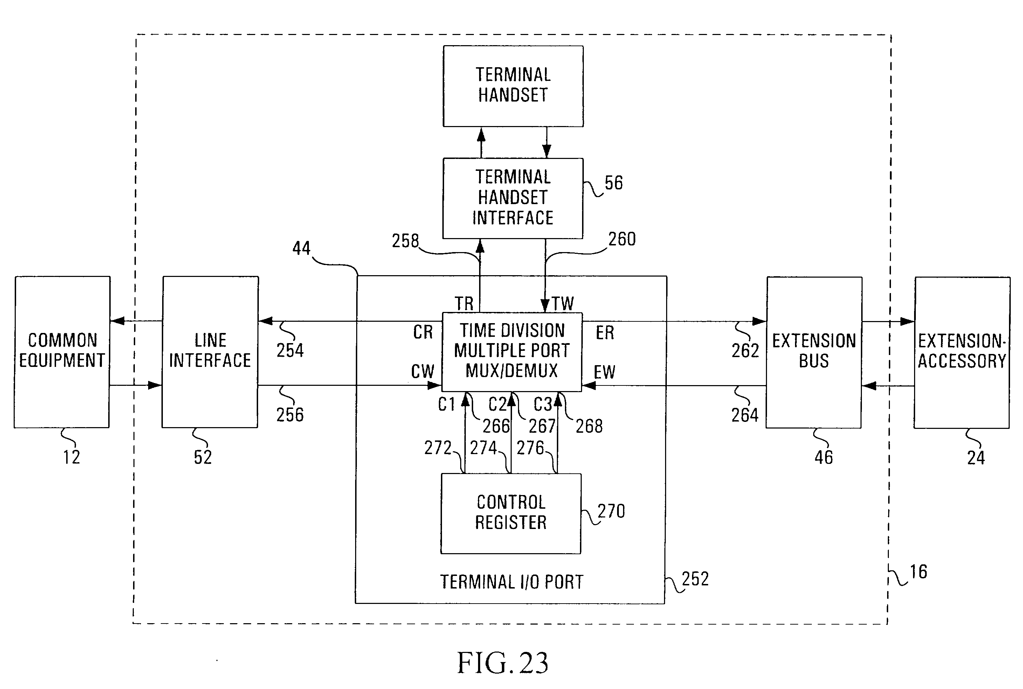

- Figure **23**: is a block diagram of an audio-path routing module within the terminal of Figure **3**, the audio-path routing module including a multiplexer/demultiplexer;

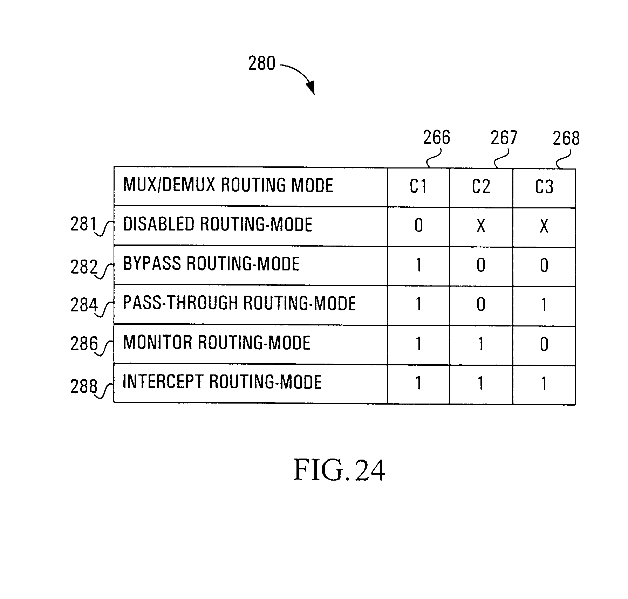

- Figure **24**: is a multiplexer/demultiplexer routing-mode table embodied within the multiplexer/demultiplexer;

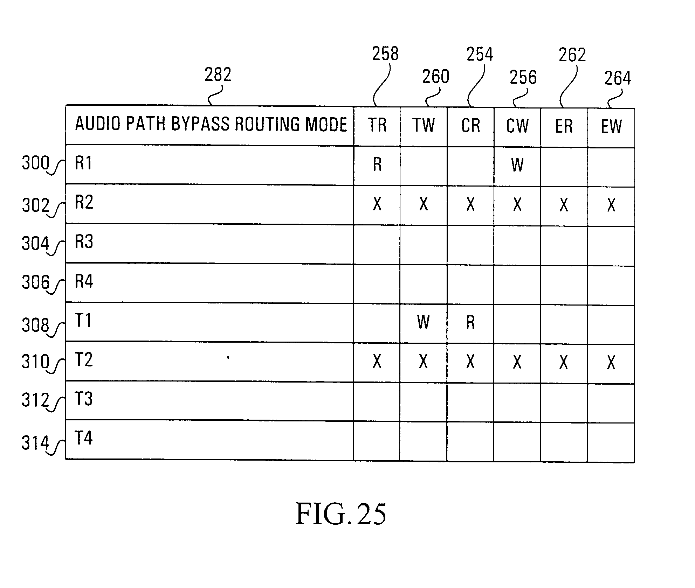

- Figure **25**: is an audio-path bypass routing-mode table embodied within the multiplexer/demultiplexer;

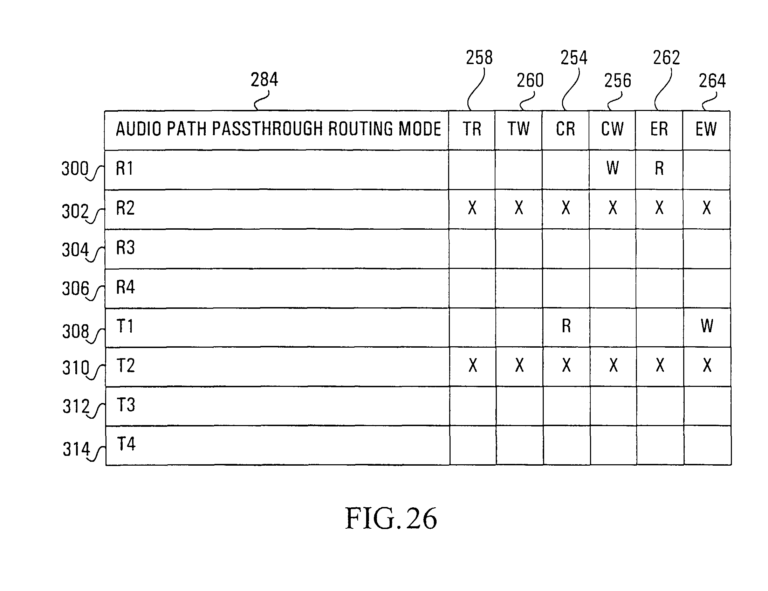

- Figure **26**: is an audio-path pass-through routing-mode table embodied within the multiplexer/demultiplexer;

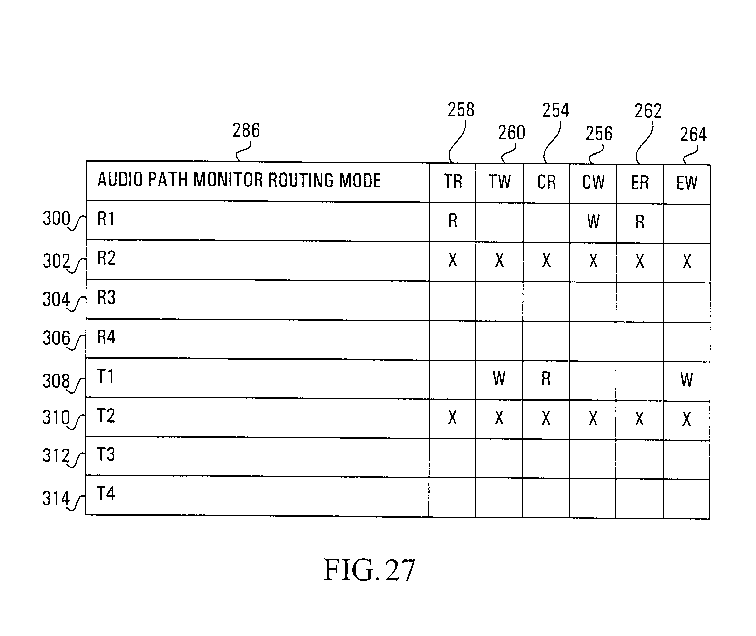

- Figure **27**: is an audio-path monitor routing-mode table embodied within the multiplexer/demultiplexer;

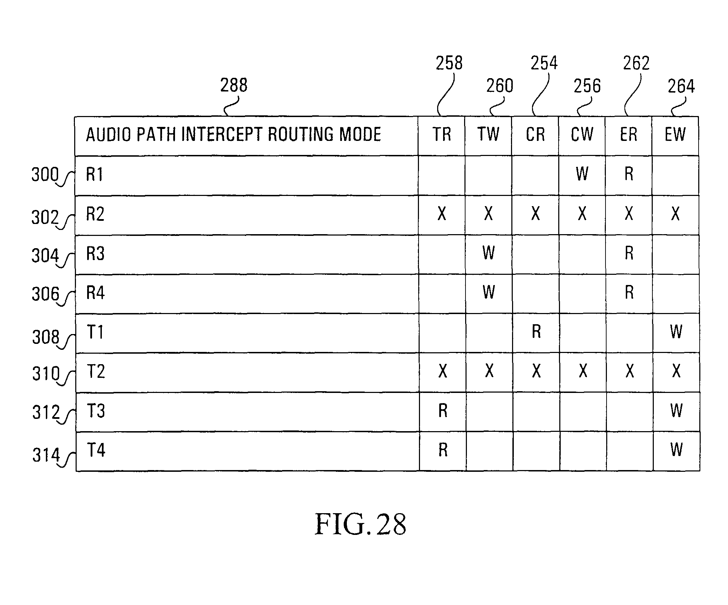

- Figure **28**: is an audio-path intercept routing-mode table embodied within the multiplexer/demultiplexer;

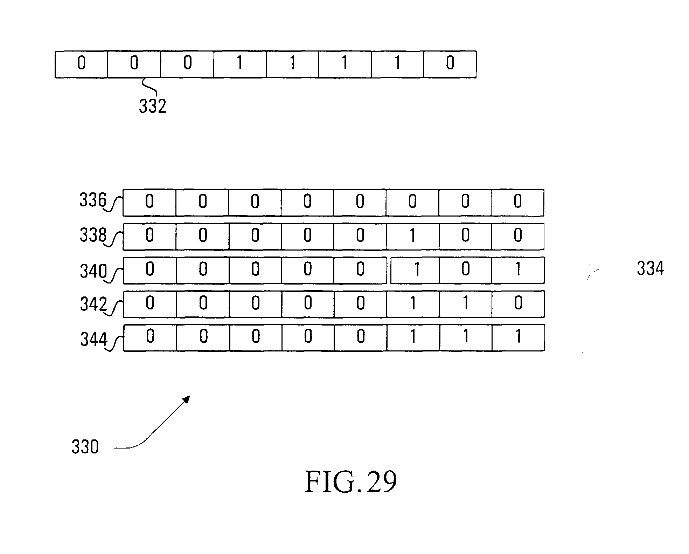

- Figure **29**: is a schematic representation of a multiplexer/demultiplexer control message format;

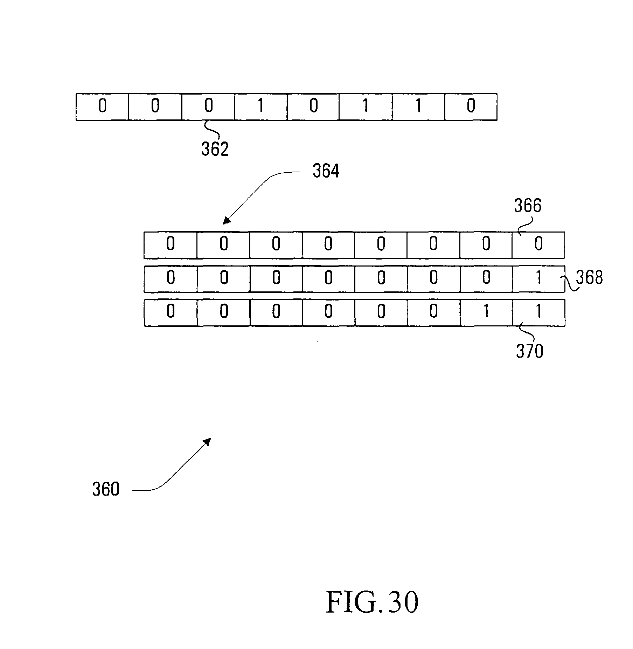

- Figure **30**: is a schematic representation of a handset control message format;

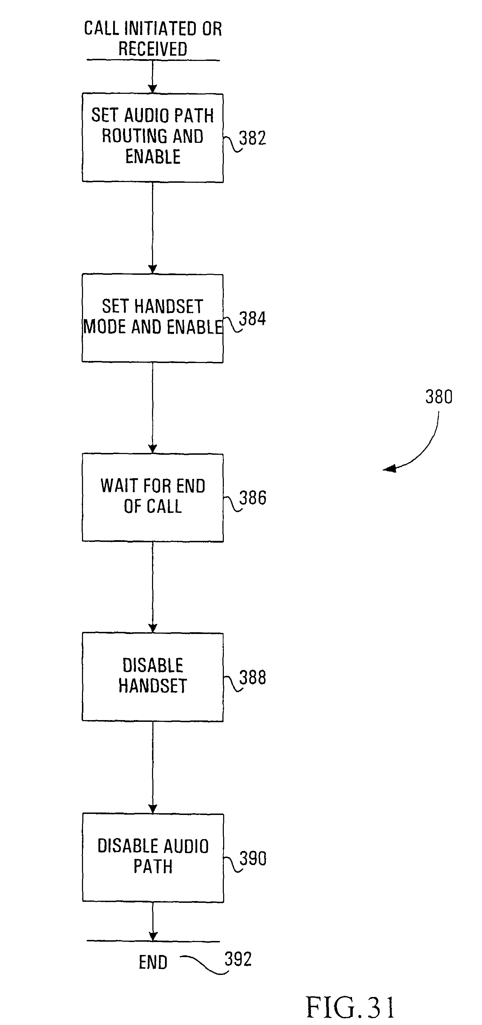

- Figure **31**: is a flowchart of an audio-path routing routine run by either the common equipment or an accessory.

### DETAILED DESCRIPTION

### The System

### Figure 1

Referring to Figure **1**, a multiple event-handler system according to a first embodiment of the invention is shown generally at **10**. The system includes common equipment shown generally at **12**, a plurality of terminal equipment shown generally at **14**, a plurality of terminal enhancement-accessories shown generally at **24**, and a plurality of extension-accessories shown generally at **26**.

In this embodiment, the plurality of terminal equipment **14** includes first, second and third terminals **16, 18, 20**. Each terminal is in communication with the common equipment **12** by a common signal path known as a time division multiplexed loop **22**.

The first terminal **16** cooperates with first and second extension-accessories **28, 30** and first and second enhancement-accessories **32** and **34** respectively. Similarly, the second terminal **18** cooperates with a third extension-accessory **36** and the third terminal **20** cooperates with a fourth extension-accessory **38**.

An enhancement-accessory **24** enhances the ability of terminal equipment **14** to perform its native functions. For example, an enhancement-accessory **24** might include a bank of speed-dial buttons with indicators, including self-labelling soft-key indicators, or even a full qwerty keyboard to augment a terminal's keypad. Another enhancement-accessory **24** might include an enhanced visual display device.

In contrast, an extension-accessory **26** extends the ability of terminal equipment **14** to perform new functions. For example, an extension-accessory **26** might include a full-duplex speakerphone module or a computer-telephony interface.

Each of the common equipment **12**, the terminals **16, 18, 20**, the enhancement-accessories **32, 34**, and the extension-accessories **28, 30, 36, 38** is a separate event-handler within the multiple event-handler system **10**. As will be discussed further below, these multiple event-handlers are connected to communicate in various network topologies to achieve various desirable results.

The common equipment **12**, which may include a private branch exchange (PBX), has common equipment read only memory **13** in which is stored program codes for directing a common equipment processor **11** to execute an accessory routing routine **15** and a terminal routing routine **17**. These routing routines **15, 17** determine the respective accessory and terminal portions of the multiple event-handler system **10** topology. In addition, the common equipment **12** is in communication with common equipment random access memory RAM **19** in which is stored a plurality of common equipment tables **21**. It is to be understood that some of the non-volatile storage implemented in the common equipment read only memory **13** might be implemented instead in other non-volatile memory devices or mass storage devices including a hard disk.

### Figure 2

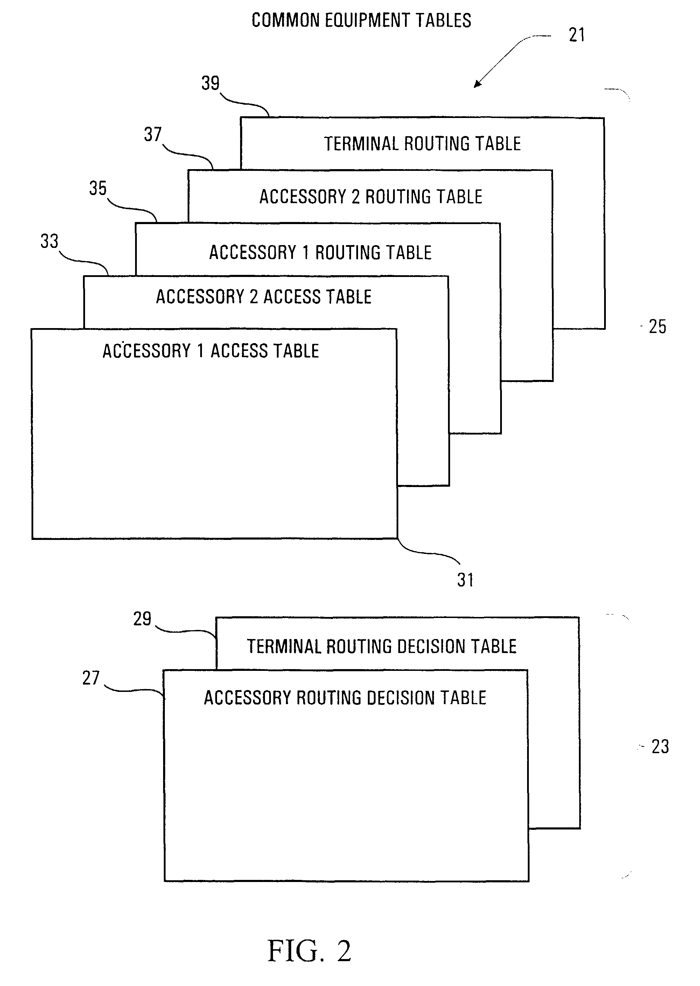

Referring to Figure **2**, the common equipment tables **21** associated with each piece of terminal equipment **14** include a plurality of fixed tables shown generally at **23** and a plurality of variable tables shown generally at **25**.

The fixed tables **23** include an accessory routing decision table **27** and a terminal routing decision table **29**. As will be discussed further below, these fixed decision tables **27, 29** embody the logic used to adjudicate potential changes to the topology of the multiple event-handler system **10**.

The variable tables **25** include an extension-accessory #**1** access table **31**, an extension-accessory #**2** access table **33**, an extension-accessory #**1** routing table **35**, an extension-accessory #**2** routing table **37** and a terminal routing table **39**. Initially, each of the fields in each of the variable tables **25** are initialized to **0**. As will be discussed further below, these variable access tables **31, 33** and routing tables **35, 37, 39** implement the access and routing topology of the multiple event-handler system **10**.

### The Terminal

### Figure 3

Referring to Figure **3**, the architecture of the first terminal **16** is shown in greater detail. The first terminal **16** includes a terminal processor **40** having data and address busses collectively shown at **42** for connection to an I/O port **44**, an extension bus interface **46**, terminal random access memory **48**, and terminal read only memory **50**.

The I/O port **44** is in communication with a line interface **52** in communication with the loop **22**, a universal asynchronous receiver transmitter (UART) **54** in communication with a daisychain of the enhancement-accessories **32, 36**, and user-interface devices **55** including a handset interface **56**, a headset interface **58**, a hands-free interface **59**, a display interface **60** and a keyboard interface **62**.

The extension bus interface **46** includes a universal synchronous asynchronous receiver transmitter (USART) interface **64**, a four-wire synchronous interface **66** and a first bus connector **68**.

The USART interface **64** and the four-wire synchronous interface **66** are connected through the data and address busses **42** for communication with the terminal processor **40**. The USART has a plurality of communications signal outputs **70** which are connected to respective pins shown generally at **72** on the first bus connector **68**.

Similarly, the four-wire synchronous interface has a plurality of communications signal outputs **74** which are connected to separate terminals **76** on the first bus connector **68**.

The first terminal **16** further includes an extension-accessory connection module shown generally at **78** which includes a second bus connector **80** operable to be connected to the first bus connector **68** and first and second extension-accessory connectors **82** and **84** for connecting to the first and second extension-accessories **28** and **30** respectively.

The extension-accessory connectors **82** and **84** are connected to the second bus connector **80** by a plurality of signal lines shown generally at **90**. Generally, connections to the first extension-accessory connector **82** are duplicated in the same physical locations and arrangement in the second extension-accessory connector **84**. Thus, the extension-accessory connection module **78** effectively forms a Y-connector from the first and second extension-accessory connectors to the second bus connector **80**.

### Figure 4

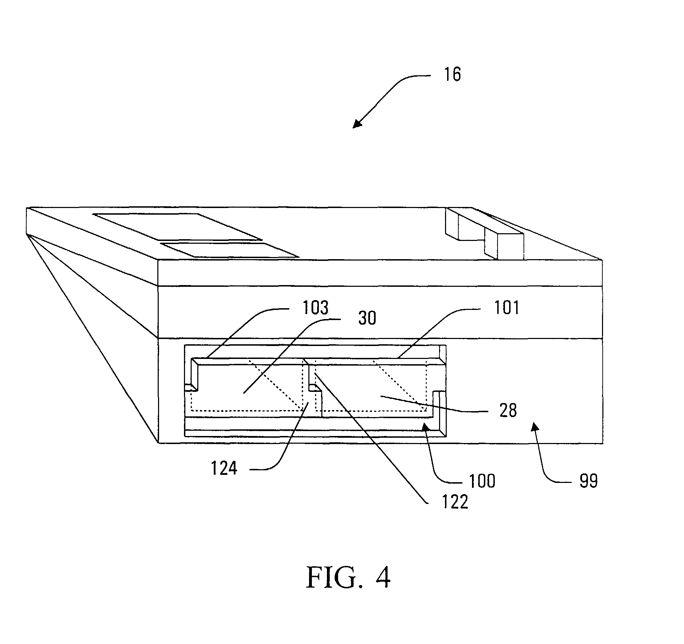

Referring to Figure **4**, a rear view of the first terminal **16** is illustrated. The first terminal **16** has a rear face **99** having an extension-accessory receptacle shown generally at **100**.

The receptacle **100** has first and second extension-accessory receiving receptacles **101** and **103** in which are installed the first and second extension-accessory connectors **82** and **84** (not shown in Figure **4**) for receiving the first and second extension-accessories shown generally at **28** and **30** therein. The first and second extension-accessory receiving receptacles **101** and **103** are disposed closely adjacent each other.

### Figure 5

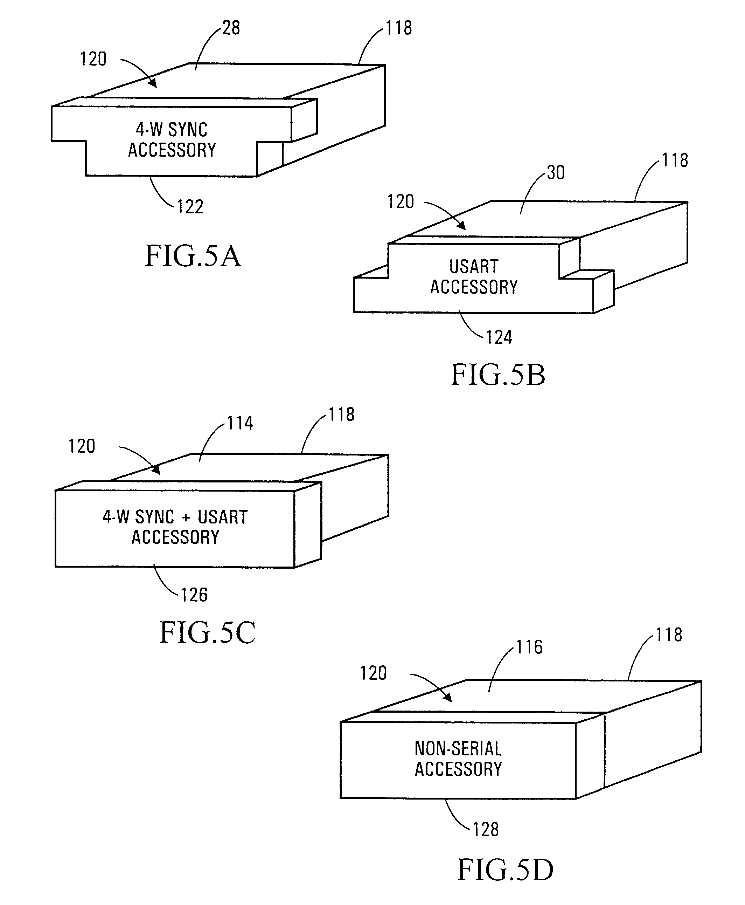

Referring to Figure **5**, first, second, fifth and sixth extension-accessories are shown at **28, 30, 114** and **116** respectively. The first extension-accessory **28** is generally representative of each of the other extension-accessories in that it includes a connector end portion **118** and a distal end portion shown generally at **120**. The distal end portion **120** of each extension-accessory **28, 30, 114**, **116** is fitted with respective first, second, fifth, and sixth keying members **122**, **124, 126** and **128**.

The first keying member **122** has a broad T shape which identifies a four-wire synchronous extension-accessory whereas the second extension-accessory **30** has a second keying member **124** having an inverted T shape which identifies it as a USART compatible extension-accessory.

In addition, the fifth extension-accessory **114** has a rectangular fifth keying member **126** which identifies it as a combined four-wire and USART-compatible extension-accessory and the sixth extension-accessory **116** has a smaller, rectangular sixth keying member **128**, ie. smaller than the fifth keying member **126** on the fifth extension-accessory **114**, to identify it as a non-serial extension-accessory. The non-serial extension-accessory merely draws power from the extension bus interface **46** and does not connect to any communications signal lines in either the first or second extension-accessory connectors **82** or **84** shown in Figure **3**.

The use of the keying members **122, 124, 126** and **128** shown in Figure **5** either permits or prevents other extension-accessories from being installed in an adjacent extension-accessory receiving receptacle **101** or **103** shown in Figure **4**. For example, if a four-wire extension-accessory as shown at **28** in Figure **5** were installed in the first extension-accessory receiving receptacle **101**, the first keying member **122** would interfere with a keying member of an extension-accessory having a similarly shaped keying member, due to the close spacing between the first and second extension-accessory connectors **82** and **84**.

However, the second extension-accessory **30** would be permitted to be installed in an adjacent receptacle as the inverted T shape of the second keying member **124** would not interfere with the upright T shape of the first keying member **122** of the first extension-accessory **28**, as shown in Figure **4**. In this manner, the receptacle **100** permits only one of each extension-accessory type to be installed therein. This arrangement prevents bus contention on the signal lines **90** shown in Figure **3** between the first and second extension-accessory connectors **82** and **84**.

Referring back to Figure **3**, the terminal read only memory **50** is programmed with a message receiver routine **130**, a terminal routing routine **132**, an accessory manager routine **131**, a terminal function routine **134** and a routing control routine **135**.

The routing control routine **135** maintains a message routing table **136** and plurality of receive buffers **137** in the terminal random access memory **48**. The receive buffers **137** include a terminal receive buffer **141**, a common equipment receive buffer **142**, an extension-accessory receive buffer **143**, a enhancement-accessory receive buffer **145**, and an accessory manager receive buffer **147**. The RAM further includes a terminal control buffer **133** and an accessory manager control buffer **149**.

Referring to Figures **1** and **3**, the common equipment **12**, each of the terminals **16, 18** and **20**, each of the enhancement-accessories **32, 34**, and each of the extension-accessories **28, 30, 36** and **38** are operable to communicate with each other by passing messages having predefined formats to each other.

### Messages

### Figure 6

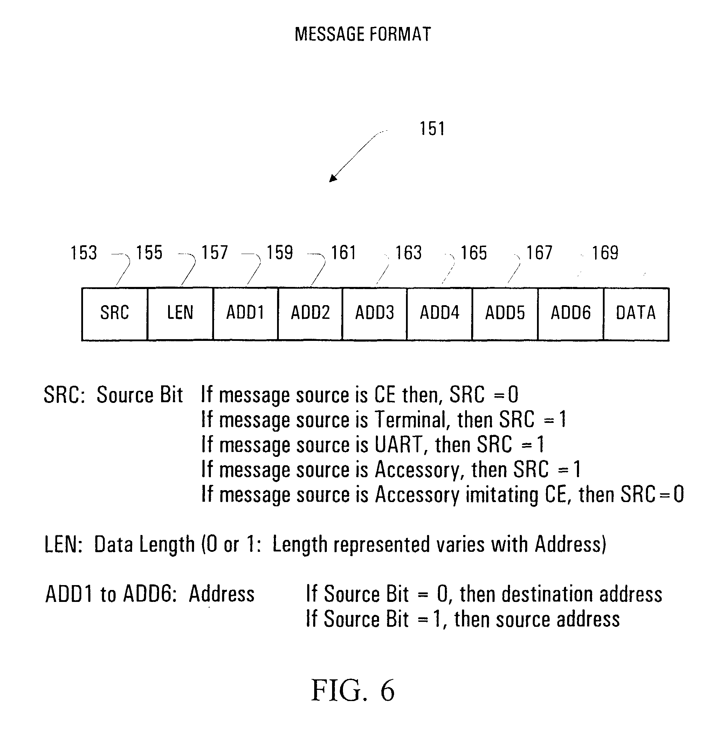

Referring to Figure **6**, a representative message format is shown generally at **151**. The message format **151** includes a source field **153**, a length field **155**, first, second, third, fourth, fifth and sixth address fields **157, 159, 161, 163, 165** and **167** and a plurality of data fields shown generally at **169**. Each of the fields, up to the data fields, is one bit wide, whereas the data field **169** may be a plurality of bytes wide.

The source bit is set to **0** or **1**, with a **0** indicating that the message source is the common equipment **12** or an extension-accessory **26** imitating the common equipment **12** and a **1** indicating that the source is the terminal equipment **14**, an enhancement-accessory **24** or an extension-accessory **26**.

The length field is **0** or **1** and is set to **0** when the data field **169** is only one byte long and is set to **1** when the data field **169** is more than one byte long.

The address fields **157** through **167** are set individually to **1** or **0** to specify an address of a particular functional block within the common equipment **12**, the first terminal **16**, the enhancement-accessory **24** or the extension-accessory **26** with which the message is associated. If the contents of the source field **153** are **0** then the address fields indicate a destination address. Alternatively, if the contents of the source field **153** are equal to **1** then the address fields specify the source address.

Referring back to Figures **1** and **3**, messages according to the indicated format are passed between the first terminal **16** and the extension-accessories **28** and **30** using the extension-accessory connection module **78**. Similarly, messages between the first terminal **16** and the enhancement accessories **32, 34** are passed through the UART **54** and the I/O port **44**. Messages between the terminals **16, 18** and **20** and the common equipment **12** are passed on the loop **22**.

### Terminal Routing

### Figure 7

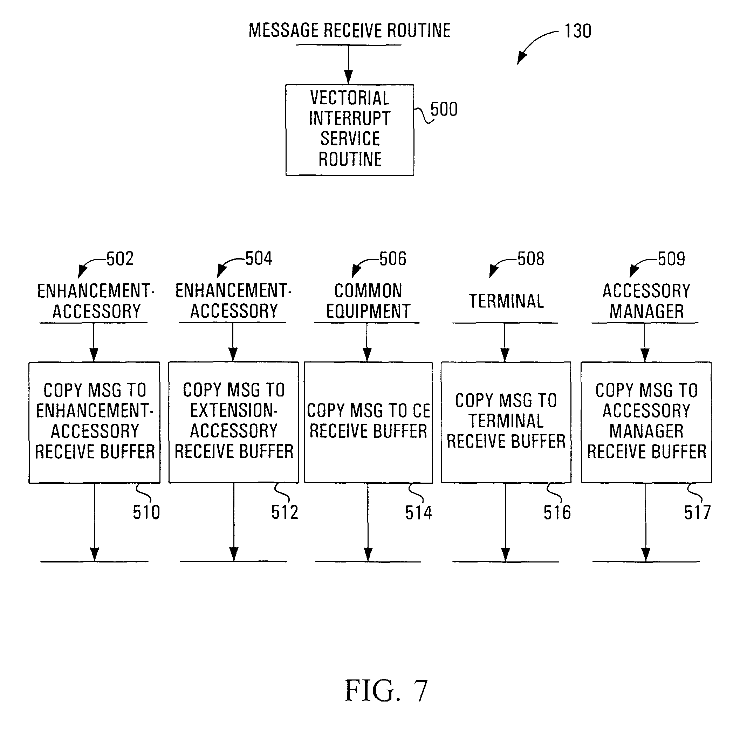

Referring to Figure **7**, the message receive routine is shown generally at **130**. This routine identifies the source of a newly received message and, based upon the source, places the message in the appropriate one of a set of buffers.

The message receive routine begins with a first block **500** that embodies a conventional vector-interrupt service routine, directing the terminal processor **40** to begin executing code stored in the terminal read only memory **50** at a location addressed by an interrupt vector. The specific interrupt vector received by the terminal processor **40** corresponds to the source address of a corresponding message just received at the first terminal **16**.

The message source can include a source within routines run by the terminal processor **40** itself, the common equipment **12** through the line interface **52**, an extension-accessory **26** through the USART interface **64** or four-wire synchronous interface **66**, or an enhancement-accessory **24** through the UART **54**.

The interrupt vector can contain one of five address values, corresponding respectively to a terminal message receive routine **502**, a common equipment message receive routine **504**, an extension-accessory receive routine **506**, an enhancement-accessory receive routine **508**, and an accessory manager receive routine **509**.

The terminal message receive routine **502** begins with block **510**, which directs the terminal processor **40** to copy the received message into the terminal receive buffer **141**. The terminal message receive routine **502** then ends.

The common equipment message receive routine **504** begins with block **512**, which directs the terminal processor **40** to copy the received message to the common equipment receive buffer **142**. The common equipment message receive routine **504** then ends.

The extension-accessory receive routine **506** begins with block **514**, which directs the terminal processor **40** to copy the received message to the extension-accessory receive buffer **143**.

The enhancement-accessory receive routine **508** begins with block **516**, which directs the terminal processor **40** to copy the received message to the enhancement-accessory receive buffer **145**.

Finally, the accessory manager receive routine **509** begins with block **517**, which directs the terminal processor **40** to copy the received message to the accessory manager receiver buffer **147**.

In this manner, the message receive routine **130** receives messages, determines their source and copies them into a buffer representative of their source.

### Figure 8

Referring to Figure **8**, an overview illustration of the terminal routing routine **132** is presented. This overview is the combination of five threads as illustrated in Figure **8**A, Figure **8**B, Figure **8**C, Figure **8**D, and Figure **8**E, the threads being respectively invoked when a message is received into the terminal receive buffer **141**, the common equipment receive buffer **142**, the extension-accessory receive buffer **143**, the enhancement-accessory receive buffer **145**, or the accessory manager receive buffer **147**.

Thus, upon receipt of a message in any one of these buffers, **141, 142, 143, 145, 147,** a terminal message routing routine **518**, a common equipment message routing routine **520**, an extension-accessory message routing routine **522**, a enhancement-accessory message routing routine **524**, and an accessory manager message routing routine **525** are respectively run. These routines, **518, 520, 522, 524, 525** therefore act as subroutines of the terminal routing routine **132**, each subroutine being independently invoked, depending upon the source of the message received.

### Figure 8A

Referring specifically to Figure **8**A, the terminal message routing routine **518** begins with a first decision block **516**, which tests the contents of the C**1** field of the message routing table **136** shown in Figure **9**.

If the contents of this field are **0**, then block **526** directs the terminal processor **40** to transmit the message stored in the terminal receive buffer **141** to the common equipment **12** through the line interface **52**.

Otherwise, or after completion of block **526**, block **528** directs the terminal processor **40** to determine the contents of the D**1** field of the message routing table **136** and if such contents are equal to **0**, to execute block **530** which directs the terminal processor **40** to read the contents of the source field of the message to determine whether or not the source is equal to **1**. If so, then block **532** directs the terminal processor **40** to transmit the message stored in the terminal receive buffer **141** to the enhancement-accessory **24**. The terminal message routing routine **518** is then ended.

Alternatively, if at block **528** the D**1** field is set to a **1**, or if at block **530** the source bit is set to **0**, the terminal message routing routine **518** is ended.

It should be reiterated at this point that messages received in the terminal receive buffer **141** are messages which are produced by the terminal itself. Such messages may be produced by the user interface devices **55** in response to keypress operations or the like or in response to messages produced by the terminal processor **40** itself in accordance with other functional routines (not shown).

### Figure 8B

Referring to Figure **8**B, when a message is received in the common equipment receive buffer **142**, the common equipment message routing routine **520** is invoked.

This routine begins with a first block **535**, which directs the terminal processor **40** parse the message as necessary to determine whether it is a priority message, such as a sanity check. In this embodiment, a sanity check message is identified by the characteristic that it has a single byte data field **169** having all bits inactive.

If the message is a priority message, then block **537** directs the terminal processor **40** to immediately generate a response message and to transmit the response message to the to the common equipment **12**, more particularly to a common equipment control register (not shown). Thereafter, the common equipment message routing routine **520** is ended.

Alternatively, if the message is not a priority message, then block **539** directs the processor to transmit the message stored in the common equipment receive buffer **142** to the extension-accessory **26**, more particularly to a extension-accessory control buffer (not shown).

Then, blocks **541, 543, 545** cascade to direct the terminal processor **40** to parse the address fields **157, 159, 161, 163, 165, 167** of the message to respectively determine whether the encoded address maps into the address space allocated to the accessory manager routine **131**, the first terminal **16** generally, or the enhancement-accessory **24**.

If at block **541** it was determined that the message was addressed to the accessory manager, then block **547** directs the terminal processor **40** to test the contents of the TCM field of the message routing table **136**. If such contents are equal to **1**, then the common equipment message routing routine **520** is ended. Alternatively, if such contents are equal to **0**, then the common equipment is empowered to arbitrate message routing within the multiple event-handler system **10** and block **551** directs the terminal processor **40** to transmit the message to the accessory manager control buffer **149**. Thereafter, the common equipment message routing routine **520** is ended.

Alternatively, if at block **543** it was determined that the message was addressed to the terminal generally, then block **553** directs the terminal processor **40** to test the contents of the AB**1** field of the message routing table **136**. If such contents are equal to **1**, then the common equipment message routing routine **520** is ended. Alternatively, if such contents are equal to **0**, then block **555** directs the terminal processor **40** to transmit the message to the terminal control buffer **133**. Thereafter, the common equipment message routing routine **520** is ended.

Alternatively, if at block **545** it was determined that the message was addressed to the enhancement-accessory **24**, then block **557** directs the terminal processor **40** to test the contents of the AB**2** field of the message routing table **136**. If such contents are equal to **1**, then the common equipment message routing routine **520** is ended. Alternatively, if such contents are equal to **0**, then block **559** directs the terminal processor **40** to transmit the message to the enhancement-accessory control buffer (not shown). Thereafter, the common equipment message routing routine **520** is ended.

Alternatively, if at block **545** it was determined that the message was not addressed to the enhancement-accessory **24**, then the common equipment message routing routine **520** is ended.

### Figure 8C

Referring to Figure **8**C, when a message is received in the extension-accessory receive buffer **143**, the extension-accessory message routing routine **522** is run.

This routine begins with a first block **561**, which directs the terminal processor **40** to test the contents of the source field **153** of the message. If such contents are equal to **1**, then block **563** directs the terminal processor **40** to transmit the message stored in the extension-accessory receive buffer **143** to the common equipment **12**, more particularly to a common equipment control buffer (not shown). Thereafter, the extension-accessory message routing routine **522** is ended.

Then, blocks **565, 567, 569** cascade to direct the terminal processor **40** to parse the address fields **157, 159, 161, 163, 165, 167** of the message to respectively determine whether the encoded address maps into the address space allocated to the accessory manager routine **131**, the first terminal **16** generally, or the enhancement-accessory **24**.

If at block **565** it was determined that the message was addressed to the accessory manager, then block **571** directs the terminal processor **40** to test the contents of the TCM field of the message routing table **136**. If such contents are equal to **0**, then the extension-accessory message routing routine **522** is ended. Alternatively, if such contents are equal to **1**, then an extension-accessory **26** is empowered to arbitrate routing in the multiple event-handler system and block **573** directs the terminal processor **40** to transmit the message to the accessory manager control buffer **149**. Thereafter the extension-accessory message routing routine **522** is ended.

Alternatively, if at block **567** it was determined that the message was addressed to the first terminal generally, then block **575** directs the terminal processor **40** to test the contents of the AB**1** field of the message routing table **136**. If such contents are equal to **0**, thereafter the extension-accessory message routing routine **522** is ended. Alternatively, if such contents are equal to **1**, then block **577** directs the terminal processor **40** to transmit the message to the terminal control buffer **133** and thereafter the extension-accessory message routing routine **522** is ended.

Alternatively, if at block **569** it was determined that the message was addressed to the enhancement-accessory **24**, then block **579** directs the terminal processor **40** to test the contents of the AB**2** field of the message routing table **136**. If such contents are equal to **0**, then the extension-accessory message routing routine **522** is ended. Alternatively, if such contents are equal to **1**, then block **581** directs the terminal processor **40** to transmit the message to the enhancement-accessory control buffer (not shown) and thereafter the extension-accessory message routing routine **522** is ended.

Alternatively, if at block **569** it was determined that the message was not addressed to the enhancement-accessory **24**, then the extension-accessory message routing routine **522** is ended.

### Figure 8D

Referring to Figure **8**D, upon receipt of a message in the enhancement-accessory receive buffer **145**, the enhancement-accessory message routing routine **524** is invoked.

This routine begins with block **554** which directs the terminal processor **40** to read the contents of the C**2** field in the message routing table **136** to determine whether or not this field contains a **0**. If it does, then block **556** directs the terminal processor **40** to transmit the contents of the enhancement-accessory receive buffer **145** to the common equipment through the line interface **52**.

Alternatively, if the contents of the C**2** field of the message routing table **136** are equal to **1**, or upon completion of block **556**, block **558** directs the terminal processor **40** to read the contents of the D**2** field to determine whether such contents are equal to **0** or **1**. If the contents are equal to **0**, block **560** directs the terminal processor **40** to determine whether or not the message stored in the enhancement-accessory receive buffer **145** has a source bit equal to **1**. If so, then block **562** directs the terminal processor **40** to transmit the contents of the enhancement-accessory receive buffer **145** to the extension-accessory.

If the contents of the D**2** field of the message routing table **136** are **1** or if the source bit of the message is equal to **0**, or upon completion of block **562**, the enhancement-accessory message routing routine **524** is ended.

### Figure 8E

Referring to Figure **8**E, upon receipt of a message in the accessory manager receive buffer **147**, the accessory manager message routing routine **525** is invoked.

This routine begins with block **563** which directs the terminal processor **40** to transmit the contents of the accessory manager receive buffer **147** to the common equipment **12**. Thereafter, block **565** directs the terminal processor **40** to transmit the contents of the accessory manager receive buffer **147** to the extension-accessory **26** and the accessory manager message routing routine **525** is ended.

Thus, it will be appreciated that the terminal routing routine **132** and message routing table **136** are used to direct the terminal processor **40** to retransmit messages received from either the terminal processor **40** itself, the common equipment, the extension-accessory **26** or the enhancement-accessory **24** to various other message handling devices in communication with the first terminal **16**.

### Figure 9

Referring briefly to Figure **9**, the message routing table is shown generally at **136** and includes first, second, third, fourth, fifth, sixth and seventh fields labelled TCM, AB**2**, C**2**, D**2**, AB**1**, C**1** and D**1** respectively. These fields are used to hold respective bits which control the operation of various decision blocks within the terminal routing subroutines **518, 520, 522, 524, 525**.

Initially, each field of the message routing table **136** is loaded with 0's which sets a monitor mode, in which messages between the common equipment **12** and the first terminal **16** are also routed to each enhancement-accessory **24** and each extension-accessories **26** to be monitored, and perhaps acted upon, but not manipulated.

In particular, the TCM field indicates to the first terminal **16** whether empowerment to arbitrate routing in the multiple event-handler system **10** resides with the common equipment **12** (the default condition) or an extension-accessory **26**.

### Figure 10

Referring to Figure **10**, the terminal function routine is shown generally at **134**. The purpose of the terminal function routine is to separate routing messages from non-routing messages.

The terminal control buffer **133** is also shown in this figure for reference. It will be recalled that the terminal control buffer **133** receives messages from the common equipment message routing routine **520** and the extension-accessory message routing routine **522** shown in Figures **8**B and **8**C respectively.

The terminal function routing routine **134** begins with a first block **564** which directs the terminal processor **40** to read the contents of the message to determine whether or not the message is a routing message. If the message is not a routing message, block **566** directs the terminal processor **40** to transmit the message to the user interface devices **55**. Such message may include one which causes a particular image to occur on the display interface **60**.

If at block **564**, the received message is a routing message, then block **568** directs the terminal processor **40** to call the routing control routine shown generally at **570** in Figure **11**.

### Figure 11

Referring to Figure **11**, the routing control routine includes a block **572** which directs the terminal processor **40** to copy a portion of the message stored in the terminal control buffer **133** into corresponding fields, TCM, AB**2**, C**2**, D**2**, AB**1**, C**1** and D**1** of the message routing table **136** shown in Figure **9**. Thus, it will be appreciated that the message routing table **136** may be altered and hence the decision making process of Figures **8**A - **8**D may be altered in response to particular routing messages received at the terminal.

### Extension Accessories

### Figure 12

Referring back to Figure **12**, the first and second extension-accessories are similar in that they each include a microprocessor **150** having memory shown generally at **152** programmed with extension-accessory routing control routines **154** and extension-accessory function routines **156**. In addition, the memory **152** is preprogrammed with a primary access table **158**a and a secondary access table **158**b and has memory for dynamically storing an extension-accessory routing table **160**.

The extension-accessory further includes a routing control interface **162** having a first input **164** for receiving messages from the first terminal **16** and a first output **166** for transferring messages to the extension-accessory microprocessor **150**. The routing control interface **162** further has a second output **168** for transmitting messages to the first terminal **16** and has a second input **170** for receiving messages from the extension-accessory microprocessor **150**. The routing control interface **162** is implemented by the extension-accessory routing control routines **154**.

In general, messages are passed from the routing control interface **162** to the extension-accessory microprocessor **150** through the first output **166** only when the primary access table 158a has a control access table field entry defining that the extension-accessory should have the control of the address range or when the contents of the corresponding field of the observe access table indicates that the extension-accessory should have the observe status of the message.

In other words, when a message is received at the routing control interface **162**, if the contents of the corresponding field of the control access table **172** and observe access table **174** indicate that the extension-accessory is to have no control and is not to observe the message, the message is not forwarded to the extension-accessory microprocessor **150**.

### Extension-Accessory Routing

### Figure 13

Referring to Figure **13**, a representative primary access table preprogrammed in each extension-accessory is shown generally at **158**a. The access table includes a type field **171**, a control access table **172** and an observe access table **174**. The type field **171** is used to store a single bit to represent a desired terminal routing configuration. When the bit is a **0**, a monitor routing method is preferred and when the bit is a **1**, an intercept routing method is preferred.

In a monitor routing, messages exchanged between the common equipment **12** and the first terminal **16** are also routed to the extension-accessory **26** to be monitored, and perhaps acted upon, but not manipulated.

In an intercept routing, an extension-accessory **26** is enabled to not only receive messages exchanged between the common equipment **12** and the first terminal **16**, but is also enabled to intercept and manipulate such messages before they reach their addressed destination.

Furthermore, in an intercept routing, an extension-accessory **26** can independently generate messages to either the common equipment **12** or the first terminal **16** and disguise such messages so that they appear to have been generated by the first terminal **16** or the common equipment **12** respectively.

The control access table **172** includes twenty-four fields representing twenty-four corresponding address ranges of user interface devices or subfunctions of such devices within the first terminal **16** as shown in Figure **3**. Such addresses are used to identify particular functions to be controlled by messages sent by an extension-accessory **26** or the common equipment **12** to the first terminal **16**.

Each field of the control access table **172** is used to store a respective single bit representing whether or not the corresponding address range is desired to be controlled or not controlled by the extension-accessory **26**. A desire to control the address range is indicated by a **1** whereas a desire not to control the address range is indicated by a **0** in the corresponding field.

Similarly, the observe access table **174** includes twenty-four fields, each corresponding to a respective address range as described above. In this table, a **1** is used to indicate that the extension-accessory **26** desires to observe messages associated with the corresponding address range and a **0** indicates no desire to observe messages associated with such address range.

Together the control access table **172** and the observe access table **174** define one of three desired types of access to respective address ranges. These types of desired access are defined by the bits in respective fields and because there are two fields associated with a given address range and because each field can have one of two values, there are four possible desired access modes including blind, observe, control and invalid, these states being represented by control/observe access bits as follows: **00, 01,10** and **11**.

In summary therefore, each extension-accessory includes its own individual primary access table as shown in Figure **13** and each primary access table specifies a desired terminal routing, a desired control access and a desired observe access for the address space of user interface devices controlled by the terminal.

The secondary access table **158**b has the same format but with different contents in some of the twenty-four fields to specify a less demanding desire for observation and control.

Referring back to Figures **3** and **12**, each extension-accessory includes a connector terminal **180, 182** which cooperate with corresponding terminal connectors **184, 186** in the extension-accessory connectors **82, 84** to transmit a notification signal through the second bus connector **80** to the terminal processor **40** to indicate the presence or absence of an extension-accessory in an extension-accessory connector **82, 84**.

This arrangement renders the extension-accessories **28** and **30** hot-pluggable, in other words operable to be inserted and retracted from respective extension-accessory connectors **82** and **84** while power is supplied to the unit. In response to the notification signal, the terminal processor **40** generates an extension-accessory report status message which is sent to the common equipment **12** through the line interface **52** as described in connection with Figure **8**A. The common equipment **12** receives the extension-accessory report status message and invokes and runs the extension-accessory routing routines shown in Figures **14**A and **14**B.

### Figure 14A

Referring to Figure **1** and **14**A, the extension-accessory routing routines include a first portion **189**, which is run when an extension-accessory **26** is newly connected to the terminal, and a second portion **191**, which is run in response to a specific access request message.

The extension-accessory routing routine begins in response to receipt of an extension-accessory report status message at the common equipment **12**. A first block **190** directs the common equipment **12** to transmit on the loop **22**, a query access message with a predefined address designation. This message is received by the first terminal **16** and is temporarily stored in the common equipment receive buffer **142** shown in Figures **3** and **8**B.

The common equipment message routing routine **520** shown in Figure **8**B then directs the terminal processor **40** to transmit the message through the second bus connector **80** to the extension-accessory **28** that caused the extension-accessory report status message to be received at the common equipment **12**.

This query access message is received at the extension-accessory **28** at the first input **164**. The extension-accessory routing control routines **154** then determine that the message has the predefined address and direct the routing control interface **162** to forward the message over the first output **166** to the extension-accessory microprocessor **150**.

The extension-accessory microprocessor **150** then calls one of the functional routines which transmits an access request message including the contents of the primary access table **158**a shown in Figure **13**, back to the first terminal **16**. On receiving the access request message at the first terminal **16**, the terminal processor **40** then retransmits the message through the line interface **52** over the loop **22** to the common equipment **12** under the direction of the extension-accessory message routing routine **522** shown in Figure **8**C.

Referring back to Figure **14**A and the second portion **191** of the extension-accessory routing routine, upon receipt of the access request message, block **192** directs the common equipment processor **11** to determine from the receive access message whether or not the access request message has been received from the first or second extension-accessories **28** or **30**.

The two extension-accessories are distinguishable because, as discussed with reference to Figure **5**, at any specific time the first terminal **16** can accept only one extension-accessory **26** connected through the four-wire synchronous interface **66** and only one extension-accessory **26** connected through the USART interface **64** in order to avoid contention at the extension bus interface **46**.

Blocks **194** and **196** are then invoked to direct the common equipment processor **11** to store the extension-accessory table received in the access request message in the extension-accessory #**1** access table **31** or extension-accessory #**2** access table **33** shown in Figure **2**.

Referring to Figures **2, 13, 14**A and **15**, after storing an extension-accessory table, block **198** directs the common equipment processor **11** to AND together the corresponding fields of the extension-accessory #**1** and extension-accessory #**2** control access tables, **172, 173**, and to AND together the corresponding fields of the control access table **172** for extension-accessory #**1** with the corresponding fields of the observe access table **175** for extension-accessory #**2**, and to further AND together corresponding fields of the observe access table **174** for extension-accessory #**1** and the control access table **173** for extension-accessory #**2**. This process is depicted schematically in Figure **15**.

Still within block **198**, the results of each of the individual AND operations taken over the entire table are ORed together to produce a conflict table (not shown) having twenty-four fields, each field representing the OR function performed on the corresponding fields in the first and second control access tables **172** and **173** and the first and second observe access tables **174** and **175**.

If the conflict table has **0**'s in every field, then no conflict between the control or observe access requested by each extension-accessory exists. However, if the first and second extension-accessories both request access to the same address range, a **1** will be present in its corresponding field in the conflict table. Thus, the conflict table identifies address ranges in which conflicts have been detected.

### Figure 14B

Referring to Figure **14**B, the common equipment processor **11** is then directed to block **199** which directs it to read the contents of the type field **171** of the extension-accessory access tables **31, 33** to determine whether or not both the extension-accessory #**1** access table **31** and the extension-accessory #**2** access table **33** indicate that their respective extension-accessories require monitor routing only, as indicated by the contents of each type field **171** being **0**. If so, then block **204** directs the common equipment processor **11** to produce and store extension-accessory routing tables as shown generally at **35** and **37** in Figure **2** and at **35/37** in Figure **16**.

### Figure 16

Each extension-accessory routing table **35/37** includes a discretion routing table **208** and a pass routing table **210**, each having twenty-four fields corresponding to the twenty-four address ranges of user interface functions described above.

Each field in the discretion routing table **208** is programmed with a single bit which, when set to **1**, indicates that the extension-accessory **26** is granted discretionary routing status and when set to **0**, indicates no discretionary routing status.

In the case of the pass routing table **210**, a **1** in a given field indicates that the extension-accessory is granted pass routing status for the indicated address range and a **0** indicates that the extension-accessory is granted no pass status for the indicated address range.

Referring to Figure **12** and Figure **16**, discretionary routing status means that when a message is received at the extension-accessory and the message has an address range in which discretionary routing has been granted, the message is passed to the extension-accessory microprocessor **150** within the extension-accessory and the function routines **156** run by the extension-accessory microprocessor **150** may, at their discretion, alter the message to produce an altered message and may retransmit this altered message back to the first terminal **16** for subsequent routing.

If the address range is granted a non-discretionary status, then the extension-accessory routing control interface **162** is required to either pass or discard the message as determined by the contents of the corresponding field in the pass routing table **210**.

Where a field in the pass routing table contains a binary **1**, the address range is given a pass status which means that messages within that address range received at the routing control interface **162** must be forwarded to the second output **168** for retransmissions back to the first terminal **16** without modification.

Where the address range is granted a no pass status, messages within the corresponding address range received at the first input **164** of the routing control interface **162** are forwarded to the extension-accessory microprocessor **150** through the first output **166** but are not retransmitted on the second output **168** of the routing control interface **162**. No pass status is important for preventing duplicate messages from being routed.

Referring to Figures **14**B and **16**, block **204** sets all fields of the extension-accessory routing tables **35/37** to **0**.

Referring back to Figure **14**B, when the extension-accessory routing tables **35/37** of Figure **16** have been prepared, block **212** directs the common equipment to transmit a grant access message, including the discretionary routing and the pass routing tables **208** and **210** shown in Figure **16** on the loop **22** shown in Figure **1**. This message is received by the first terminal **16** where it is forwarded to the associated extension-accessory and stored in the extension-accessory routing table **160** shown in Figure **12**.

Referring back to Figure **2**, copies of the extension-accessory routing tables **35** and **37**, for each of the extension-accessories, are stored in the extension-accessory #**1** routing table **35** and the extension-accessory #**2** routing table **37** respectively shown in Figure **2**.

Referring back to Figure **14**B, if the contents of both extension-accessory type fields **171** do not indicate that both extension-accessories **26** require monitor mode, ie. at least one requests intercept mode, the common equipment processor **11** is directed to block **200** to consider whether or not the conflict table has any **1**'s in it.

If not, then the common equipment processor **11** is directed to block **206** which programs each field of the discretion routing table **208** and pass routing table **210**, shown in Figure **16**, with values corresponding to routing assignments in an extension-accessory routing decision table shown generally at **211** in Figure **17**. The possible routing assignments include conflict, discretion, pass and discard and are represented by discretion and pass routing field entries as shown Figure **18**.

Referring back to Figure **14**B, block **212** directs the common equipment processor **11** to transmit a grant access message as described above.

Alternatively, if at block **200** a conflict has been detected, then block **301** directs the common equipment processor **11** to determine whether or not the access request message received from the extension-accessory **26** is a simple access request message, a resolve conflict by ratchet message or a resolve conflict by exception message.

If the determination at block **301** is that the message is a simple access request message then block **305** directs the processor to send a resolve conflict by ratchet message to the extension-accessory **26**. In this sense, ratcheting means that the extension-accessory **26** that issued the conflict-generating access request is asked to scale back or ratchet back the scope of its access request. The extension-accessory routing routine is then ended.

Referring to Figure **12**, at the extension-accessory **26**, in response to receipt of a resolve conflict by ratchet message, the extension-accessory **26** invokes one of the function routines **156** to transmit the contents of the secondary access table **158**b to the common equipment **12** in a message including an indication that the message is a ratchet message.

At the common equipment **12**, this ratchet message is handled as described in connection with Figures **14**A and **14**B in the same manner as the original access request message as described above. If at block **200**, no conflict is indicated by the conflict table, the common equipment processor **11** produces the pass and discretion tables as described above in connection with block **206**.

On the other hand, if a conflict still exists, the common equipment **12** determines, at block **301**, that the message received from the extension-accessory **26** is a ratchet message, the common equipment **12** is directed to block **309** which directs it to send a resolve conflict by exception message to the extension-accessory **26** and the extension-accessory routing routine is ended.

In otherwords, an extension-accessory **26** may be programmed to request access that will cause a theoretical conflict where the extension-accessory **26** programmers are certain that no adverse consequences will result in practice from the theoretical conflict. The exact details of such situations are not foreseeable to the programmers of the common equipment **12**; however the possible existence of such situations is. In contrast, the programmers of an extension-accessory **26** are in a position to carefully consider and test such conflicts and to determine when an exception is appropriate.

Referring back to Figure **12**, at the extension-accessory **26**, in response to the resolve conflict by exception message, the extension-accessory microprocessor **150** invokes an appropriate function routine **156** to produce a new, exception access table which will definitely overcome the conflict according to predefined rules. In this exception access table, requirements for controlling the offending address spaces are significantly relaxed to overcome the conflict. The extension-accessory **26** then sends, to the common equipment **12**, an exception response message including the exception access table.

Referring back to Figure **14**B, the exception response message is received at the common equipment as an access by exception message and is processed as described above. If at block **200**, the conflict still exists, then block **301** directs the common equipment processor **11** to determine whether the message is an exception message. If so, then the common equipment processor **11** is directed by block **311** to grant the exception by setting the pass and discretion tables according to the routing decision table (as in block **206**) except that where conflicts exist, a control request will yield discretion routing and an observe request will yield discard routing.

Alternatively, if at block **301**, the common equipment processor **11** determines the message is a concession message, then block **313** directs the common equipment processor **11** to send a disable message to the extension-accessory **26**

### Terminal Re-Routing

### Figure 19

After transmitting the extension-accessory routing tables, the common equipment is directed to the set terminal routing routine shown in Figure **19**. The set terminal routing routine begins with a first block **214** which directs the common equipment processor **11** to read the type fields **171** of the extension-accessory #**1** access table **31** and the extension-accessory #**2** access table **33** shown in Figure **2** and to use the values stored in these type fields to select a terminal routing-mode in the terminal routing decision table **29** shown in Figure **20**.

### Figure 20

Referring to Figure **20**, when both extension-accessories have associated type fields **171** which indicate a monitor terminal routing, a monitor routing flag is set (not shown) within the set terminal routine as indicated at **216** in the terminal routing decision table **29**. Otherwise, for all other combinations of monitor and intercept terminal routing status, the intercept terminal routing-mode flag is set as indicated generally at **218** in Figure **19**.

Referring back to Figure **19**, after determining the terminal routing-mode from the terminal routing decision table **29**, block **220** directs the common equipment to transmit a terminal routing message on the loop **22** shown in Figure **1**. The contents of the terminal routing message are set, depending upon whether or not the monitor or intercept flag is set.

### Figure 21

Referring to Figure **21**A, the format of the terminal routing message is shown generally at **222** and includes eight fields, six of which are shown generally at **224** which are used to hold bits for controlling routing decisions within the first terminal **16** shown in Figure **3**. These fields are labelled AB**2**, C**2**, D**2**, AB**1**, C**1** and D**1** respectively.

Referring to Figure **21**B, a terminal routing message for the monitor mode **216** in Figure **20**, is shown generally at **226** and includes **0**'s in each of the six fields **224**.

Referring to Figure **21**C, a terminal routing message indicative of the intercept mode **218** in Figure **20** is shown generally at **228** and includes the bit sequence **110110** in the six fields **224**. The six fields **224** of either the monitor message **226** or the intercept messages **228**, depending on which is sent, are stored in the terminal routing table **39** shown in Figure **2**.

Referring back to Figure **3**, the terminal routing message is received at the terminal control buffer **133** and is handled according to the terminal function routine described above in connection with Figure **10**. This re-programs the message routing table **136** shown in Figure **9** and alters the decisions made during the routing routines shown in Figures **8**A-**8**D.

### The Accessory Manager

### Figure 22

Figure **22** illustrates the process flow of the accessory manager routine **131** which directs the terminal processor **40** how to react to messages received at the accessory manager control buffer **149**. Such received messages affect the interaction between the event handlers in the multiple event-handler system **10**, including requesting changes in message routing and even requesting changes in which event handler (either the common equipment **12** or an extension-accessory **26**) is empowered to arbitrate such messages.

The accessory manager routine **131** begins with block **600** which directs the terminal processor **40** to poll the USART interface **64** to determine if a change in status has occurred since it was last polled. A status change, which is indicated by the state of a predetermined bit read from the USART interface **64**, occurs when an extension-accessory **26** is connected to or disconnected from the USART interface **64**. If no change in status has occurred, then the terminal processor **40** is directed forward to block **602**.

Alternatively, if a status change has been detected at block **600**, then block **604** directs the terminal processor **40** to read a predetermined identifier register (not shown) through the USART interface **64** to determine the nature of the status change, and in particular, the nature of the extension-accessory **26** involved in the status change. Thereafter, block **606** directs the terminal processor **40** to generate a message in response to the status change and transmit that message to the accessory message receive buffer **147**. The terminal processor **40** is then directed forward to block **602**.

At block **602**, the terminal processor **40** is directed to poll the four-wire synchronous interface **66** to determine if a change in status has occurred since it was last polled. A status change, which is indicated by the state of a predetermined bit read from the four-wire synchronous interface **66**, occurs when an extension-accessory **26** is connected to or disconnected from the four-wire synchronous interface **66**. If no change in status has occurred, then the terminal processor **40** is directed forward to block **608**.

Alternatively, if a status change has been detected at block **606**, then block **610** directs the terminal processor **40** to read a predetermined identifier register (not shown) through the four-wire synchronous interface **66** to determine the nature of the status change, and in particular, the nature of the extension-accessory **26** involved in the status change. Thereafter, block **612** directs the terminal processor **40** to generate a message in response to the status change and transmit that message to the accessory message receive buffer **147**. The terminal processor **40** is then directed forward to block **608**.

At block **608**, the terminal processor **40** is directed to poll the UART **54** to determine if a change in status has occurred since it was last polled. A status change, which is indicated by the state of a predetermined bit read from the UART **54**, occurs when an enhancement-accessory **24** is connected to or disconnected from the UART **54**. If no change in status has occurred, then the terminal processor **40** is directed forward to block **614**.

Alternatively, if a status change has been detected at block **606**, then block **616** directs the terminal processor **40** to generate a message in response to the status change and transmit that message to the accessory message receive buffer **147**. The terminal processor **40** is then directed forward to block **614**.

Block **614** directs the terminal processor **40** to read the accessory manager control buffer **149** and to determine whether it contains a message having a source field **153** and address fields **157, 159, 161, 163, 165, 167** that identify the message as having originated from the common equipment **12**. If not, then the terminal processor **40** is directed forward to block **620**.

Alternatively, if a message from the common equipment **12** has been received into the accessory manager control buffer **149**, then block **618** directs the terminal processor **40** to respond to the message and to transmit a response message to the accessory manager receive buffer **147**. Thereafter, the terminal processor **40** is directed forward to block **616**.

Block **620** directs the terminal processor **40** to read the accessory manager control buffer **149** and to determine whether it contains a message having a source field **153** and address fields **157, 159, 161, 163, 165, 167** that identify the message as having originated from an extension-accessory **26**. If not, then the terminal processor **40** is directed back to block **600** to repeat the accessory manager routine **131** loop.

Alternatively, if a message from an extension-accessory **26** has been received into the accessory manager control buffer **149**, then block **622** directs the terminal processor **40** to respond to the message and to transmit a response message to the accessory manager receive buffer **147**. Thereafter, the terminal processor **40** is directed back to block **600** to repeat the accessory manager routine **131** loop.

Thus it will be seen that the accessory manager routine **131** provides a way for the first terminal **16** to detect insertion and removal of an enhancement-accessory **24** or an extension-accessory **26**. The accessory manager routine **131** also provides a way for the first terminal **16** to receive control messages from the common equipment **12** and an extension-accessory **26**, to react to such control messages, and to respond to such control messages.

### The Audio-path Resource

### Figure 23

The preceding discussion focused on routing control messages among multiple event-handlers in the multiple event-handler system **10** to allocate resource control. The following discussion focuses on one of those allocatable resources: the audio-path.

Referring to Figure **23**, an audio-path routing module is generally illustrated at **250**, forming a portion of the I/O port **44** in the first terminal **16**. The audio-path routing module **250** is the mechanism for allocating or routing the audio-path.

The audio-path routing module **250** includes a multiple-port time-division multiplexer/demultiplexer **252**. The multiplexer/demultiplexer **252** maintains and controls access to eight time-divided channels and has six signal terminals for receiving signals into and transmitting signals from the eight time-divided channels.

The first terminal is a common equipment read-terminal **254** connected to receive a digital audio signal from the common equipment **12** through the line interface **52**. The second terminal is a common equipment write-terminal **256** connected to transmit a digital audio signal to the common equipment **12** through the line interface **52**.

The third terminal is a terminal read-terminal **258** connected to receive a digital audio signal from the terminal handset, the terminal headset, and the terminal speakerphone through the handset interface **56**, the headset interface **58**, and the hands-free interface **59** respectively. The fourth terminal is a terminal write-terminal **260** connected to transmit a digital audio signal to the terminal handset, the terminal headset, and the terminal speakerphone through the handset interface **56**, the headset interface **58**, and the hands-free interface **59** respectively.

The fifth terminal is an extension-accessory read-terminal **262** connected to receive a digital audio signal from the first extension-accessory **28** through the signal lines **90**. The sixth terminal is an extension-accessory write-terminal **264** connected to transmit a digital audio signal to the first extension-accessory **28** through the signal lines **90**.

The multiplexer/demultiplexer **252** further includes first, second, and third control terminals **266, 267, 268**.

The audio-path routing module **250** further includes a multiplexer/demultiplexer control register **270**. The multiplexer/demultiplexer control register **270** has first, second, and third output terminals **272, 274, 276** connected respectively to the first, second, and third control terminals **266, 267, 268** of the multiplexer/demultiplexer **252**.

The multiplexer/demultiplexer control register **270** is a three-bit wide register that is independently addressable through the I/O port **44** to receive and store data. The data stored in the multiplexer/demultiplexer control register **270** is presented at the first, second, and third output terminals **272, 274, 276** as digital active and inactive signals.

### Figure 24

Referring now to Figure **24**, a multiplexer/demultiplexer routing-mode table is generally illustrated at **280**. The multiplexer/demultiplexer routing-mode table **280** defines five audio-path routing-modes, each mode defined by a unique combination of states assumed by the first, second, and third control terminals **266, 267, 268**.

In this embodiment, when the first control terminal **266** assumes an inactive digital state, then a disabled routing-mode **281** is defined regardless of the state assumed by the second and third control terminals **267, 268**. In disabled routing-mode **281**, all of the read and write-terminals **254, 256, 258, 260, 262, 264** are disconnected from all of the time-divided channels maintained by the multiplexer/demultiplexer **252**.

When the first control terminal **266** assumes an active digital state, the second control terminal **267** assumes an inactive digital state, and the third control terminal **268** assumes a digital inactive state, then a bypass routing-mode **282** is defined.

When the first control terminal **266** assumes an active digital state, the second control terminal **267** assumes a digital inactive state, and the third control terminal **268** assumes a digital active state, then a pass-through routing-mode **284** is defined.

When the first control terminal **266** assumes a digital active state, the second control terminal **267** assumes a digital active state, and the third control terminal **268** assumes a digital inactive state, then a monitor routing-mode **286** is defined.

Finally, when the first control terminal **266** assumes a digital active state, the second control terminal **267** assumes a digital active state, and the third control terminal **268** assumes a digital active state then an intercept routing-mode **288** is defined.

### Figures 25, 26, 27, and 28

Referring now to Figures **25, 26, 27** and **28** the bypass routing-mode **282**, the pass-through routing-mode **284**, the monitor routing-mode **286**, and the intercept routing-mode **288** will be further discussed in greater detail.

Referring to Figures **21** and **25** the bypass routing-mode will be further defined and illustrated. As described above, the time division multiplexer/demultiplexer **252** maintains and controls access to eight time divided channels. In this embodiment, the eight time divided channels include a first receive channel **300**, a second receive channel **302**, a third receive channel **304**, a fourth receive channel **306**, a first transmit channel **308**, a second transmit channel **310**, a third transmit channel **312**, and a fourth transmit channel **314**.

In bypass routing-mode **282**, the multiplexer/demultiplexer **252** allocates to the terminal read-terminal **258** read access to the first receive channel **300**, allocates to the common equipment write-terminal **256** write access to the first receive channel **300**, allocates to the terminal write-terminal **260** write access to the first transmit channel **308** and allocates to the common equipment read-terminal **254** read access to the first transmit channel **308**.

Therefore, in bypass routing-mode **282** the first terminal **16** is connected to receive digital audio signals directly from the common equipment **12** and similarly the common equipment **12** is connected to receive digital audio signals directly from the first terminal **16**.

In contrast, the first extension-accessory **28** can neither receive nor transmit digital audio signals with either the common equipment **12** or the first terminal **16**. Thus, in audio-path bypass routing-mode **282** the first extension-accessory **28** is isolated from the audio-path established between the first terminal **16** and the common equipment **12**.

Referring now to Figure **26**, the audio-path pass-through routing-mode **284** will be further described. In this mode, the multiplexer/demultiplexer **252** allocates to the common equipment write-terminal **256** write access to the first receive channel **300** and allocates to the extension-accessory read-terminal **262** read access to the first receive channel **300**. Similarly, the multiplexer/demultiplexer **252** allocates to the common equipment read-terminal **254** read access to the first transmit channel **308** and allocates to the extension-accessory write-terminal **264** write access to the first transmit channel **308**.

Thus the first terminal **16** is isolated from the audio-path established between the first extension-accessory **28** and the common equipment **12**; in effect, digitally encoded audio signals exchanged between the first extension-accessory **28** and the common equipment **12** pass through the first terminal **16**.

Referring now to Figure **27** the audio-path monitor routing-mode **286** will be further described. In this mode, the multiplexer/demultiplexer **252** allocates to the common equipment write-terminal **256** write access to the first receive channel **300** and allocates to both the terminal read-terminal **258** and the extension-accessory read-terminal **262** read access to the first receive channel **300**. Similarly, the multiplexer/demultiplexer **252** allocates to the terminal write-terminal **260** write access to the first transmit channel **308** and allocates to both the common equipment read-terminal **254** and the extension-accessory read-terminal **262** read access to the first transmit channel **308**.

Thus, as in audio-path bypass routing-mode **282**, the multiplexer/demultiplexer **252** establishes an audio-path between the first terminal **16** and the common equipment **12** over which each may both transmit and receive digitally encoded audio signals. However, in audio-path monitor routing-mode **286** the multiplexer/demultiplexer **252** additionally connects the first extension-accessory **28** to receive, or monitor, all signals carried on the audio-path thus created. The first extension-accessory **28** is thus enabled to receive from the audio-path both signals transmitted by the common equipment **12** and signals transmitted by the first terminal **16**.

Referring now to Figure **28**, the audio-path intercept routing-mode **288** will be further described. In this mode, the multiplexer/demultiplexer **252** allocates to the common equipment write-terminal **256** write access to the first receive channel **300** and allocates to the extension-accessory read-terminal **262** read access to the first receive channel **300**. The multiplexer/demultiplexer **252** allocates to the terminal write-terminal **260** write access to the third receive channel **304** and allocates to the extension-accessory read-terminal **262** read access to the third receive channel **304**.

Additionally, the multiplexer/demultiplexer **252** allocates to the terminal write-terminal **260** write access to the fourth receive channel **306** and allocates to the extension-accessory read-terminal **262** read access to the fourth receive channel **306**. The multiplexer/demultiplexer **252** allocates to the common equipment read-terminal **254** read access to the first transmit channel **308** and allocates to the extension-accessory write-terminal **264** write access to the first transmit channel **308**.

Furthermore, the multiplexer/demultiplexer **252** allocates to the terminal read-terminal **258** read access to the third transmit channel and allocates to the extension-accessory write-terminal **264** write access to the third transmit channel **312**. Finally, the multiplexer/demultiplexer **252** allocates to the terminal read-terminal read access to the fourth transmit channel **314** and allocates to the extension-accessory write-terminal **264** write access to the fourth transmit channel **314**.

Thus, in audio-path intercept routing-mode **288**, the multiplexer/demultiplexer **252** establishes an audio-path in which digitally encoded audio signals transmitted by either the common equipment **12** or the first terminal **16** may be received only by the first extension-accessory **28**. The common equipment **12** and the first terminal **16** are enabled to receive digitally encoded audio signals from only the first extension-accessory **28**. In this way, the first extension-accessory **28** intercepts and thereby controls all signals on the audio-path.

It will be appreciated that the audio-path established by the multiplexer/demultiplexer **252**, in all four routing-modes **282, 284, 286, 288** must support isochronous transmission. Desirably, the roundtrip propagation delay of the audio-path established by the multiplexer/demultiplexer **252** is less than **200** milliseconds. Those skilled in the art will realize that the multiplexer/demultiplexer must therefore be designed to operate with small buffers.

It is also desirable that the multiplexer/demultiplexer **252** be enabled to detect a synchronization signal received at either the common equipment write-terminal **256** or the extension-accessory write-terminal **264**. The ability to receive a synchronization signal at either of these two terminals enables the audio-path established by the multiplexer/demultiplexer **252** to be synchronized to an audio signal received from either a public switch telephone network through the common equipment **12** or an audio signal received from a computer network or internetwork received through the first extension-accessory **28**.

### Figure 29

Referring now to Figure **29**, there is illustrated generally at **330** a structure for a message to control the routing-mode of the multiplexer/demultiplexer **252** through the multiplexer/demultiplexer control register **270**. The message **330** is issuable by either the common equipment **12** or the first extension-accessory **28** to the first terminal **16**, more particularly to the multiplexer/demultiplexer control register **270** within the I/O port **44**.

The routing-mode control message **330** includes a first identifier byte **332** and a second message byte **334**. The identifier byte **332** identifies a message to the I/O port **44** as being a routing-mode control message **330**. The message byte **334** embodies a combination of bits that uniquely specify each routing-mode.

In this embodiment, the message byte **334** stores one of five constants: a routing disable constant **336**, a bypass mode constant **338**, a pass-through mode constant **340**, a monitor mode constant **342**, and an intercept mode constant **344**. The five constants **336, 338, 340, 342, 344** define bit patterns of digital active and digital inactive states that correspond to the combinations of digital states that the control register output terminals **272, 274, 276** assume to respectively select the disabled routing-mode **281**, the bypass routing-mode **282**, the pass-through routing-mode **284**, the monitor routing-mode **286**, and the intercept routing-mode **288**.

When the multiplexer/demultiplexer control register **270** receives the message byte **334** through the I/O port **44**, its output terminals **272, 274, 276** assume the corresponding combination of active and inactive digital states. Thus, this combination of active and inactive digital states is present at the control terminals **266, 267, 268** of the multiplexer/demultiplexer **252**, which in response assumes the corresponding mode, namely: the disabled routing-mode **281**, the bypass routing-mode **282**, the pass-through routing-mode **284**, the monitor routing-mode **286**, or the intercept routing-mode **288**.

### Figure 30

Referring now to Figure **30**, there is generally illustrated at **360** a structure for a handset control message. The handset control message **360** includes a first identifier byte **362** and a second message byte **364**. The identifier byte **362** identifies a message to the handset interface as being a handset control message **360**. In this embodiment, the message byte **364** can store one of three handset mode constants, namely: a handset disabled mode constant **366**, a handset LoFi mode constant **368**, and a handset HiFi mode constant **370**.

On receiving a handset control message **360** via the I/O port **44**, the handset interface **56** assumes an operating mode corresponding to the constant stored in the message byte **364**. If the message byte **364** stores the handset disabled mode constant **366**, then the terminal handset interface **56** ignores any data received at the terminal read-terminal **258**.

Alternatively, if the message byte **364** stores the handset LoFi mode constant **368**, then the terminal handset interface **56** processes data received at the terminal read-terminal **258** during one multiplexed time division.

Alternatively, if the message byte **364** stored the handset HiFi mode constant **370**, then the terminal handset interface processes data received at the terminal read-terminal **258** during two multiplexed time divisions.

### Figure 31

Referring now to Figure **31**, there is illustrated generally at **380** an audio-path control routine storable in read only memory (not shown) and executable by the common equipment **12** or the first extension-accessory **28** if it has obtained control access to the audio-path resource from the common equipment **12** as described above. The audio-path control routine **380** directs a microprocessor (not shown) in either the common equipment **12** or the first extension-accessory **28** to perform specific process steps directed to routing the audio-path resource.

The audio-path control routine **380** begins when a call is initiated or received at the first terminal **16**. Block **382** directs the microprocessor (not shown) to set and enable the audio-path routing by issuing a routing-mode control message **330**. Block **384** directs the microprocessor (not shown) to set and enable the handset mode by issuing a handset control message **360**.

Block **386** directs the microprocessor (not shown) to wait for the current call to terminate.

Once the current call has terminated, block **388** directs the microprocessor to disable the handset by issuing a handset control message **360**, in particular a handset control message **360** having a message byte **364** storing the handset disabled mode constant **366**. Block **390** directs the microprocessor (not shown) to disable the audio-path by issuing a routing-mode control message **330**, in particular a routing-mode control message **330** having a message byte **334** storing the routing disable constant **336**.

Block **392** directs the microprocessor (not shown) to terminate the audio-path control routine **380**.

While specific embodiments of the invention have been described and illustrated, such embodiments should be considered illustrative of the invention only and not as limiting the invention as construed in accordance with the accompanying claims.

The following paragraphs are various alternative definitions of inventions disclosed in this application, some of which are also claimed in the set of claims which follows.
**1**. A method of controlling resources in a telecommunications system having a plurality of controllable resources and a plurality of resource controllers for controlling said resources, the method comprising the steps of:
   a) receiving a message from a resource controller at a telecommunications apparatus;
   b) selectively routing said message to at least one of said resource controllers and to a controllable resource, according to a routing scheme dependent upon a property of said message.
**2**. A method as in paragraph **1** further including the step of determining as said property of said message the source of said message and the content of said message.
**3**. A method as in paragraph **1** further including the step of identifying which of said resource controllers is the source of said message.
**4**. A method as in paragraph **3** further including the step of associating respective message receiving ports with said resource controllers respectively.
**5**. A method as in paragraph **4** further including the step of identifying which of said resource controllers is the source of a message received at said telecommunications apparatus by determining which of said message receiving ports has received said message.
**6**. A method as in paragraph **5** further including the step of associating respective message routing schemes with corresponding sources of messages.
**7**. A method as in paragraph **6** wherein the step of routing messages includes the step of interpreting a pre-defined portion of said message to determine message routing within one of said message routing schemes.
**8**. A method as in paragraph **6** further including the step of programming a router with at least one of said message routing schemes in response to receipt of a pre-defined message.
**9**. A method as in paragraph **6** further including the step of determining from said routing scheme, at least one recipient of said message.
**10**. A method as in paragraph **1** further including the step of detecting the addition of a new resource controller to said telecommunications system.
**11**. A method as in paragraph **10** further including the step of programming a router programmed with at least one of said message routing schemes to include said new resource controller in said routing scheme.
**12**. A method as in paragraph **11** further including the step of identifying said at least one new resource controller to said telecommunications apparatus.
**13**. A method as in paragraph **12** further including the step of identifying one resource controller in said system as a master resource controller.
**14**. A method as in paragraph **13** further including the step of identifying said new resource controller to said master resource controller and transmitting a pre-defined message from said master resource controller to said telecommunications apparatus to program said router with a routing scheme.
**15**. A method as in paragraph **14** further including the step of transmitting an indication of access rights from said master resource controller to said new resource controller.
**16**. A method as in paragraph **15**, further including the step of preventing any resource controller other than said master controller from transmitting a predefined message to programming said router with a routing scheme.
**17**. A method as in paragraph **16**, further including the step of preventing any resource controller other than said master resource controller from transmitting an indication of access rights to a new resource controller.
**18**. A method as in paragraph **1** further including the step of identifying at said multiple resource telecommunications apparatus at least one resource controller as a master resource controller.
**19**. A method as in paragraph **18** further including the step of identifying at said multiple resource telecommunications apparatus each resource controller in said system.
**20**. A method as in paragraph **19** further including the step of programming a router with a routing scheme in response to a pre-defined message received from said master resource controller.
**21**. A method as in paragraph **20** further including the step of re-defining the identification of said master resource controller in response to a pre-defined message received from said master resource controller.
**22**. A method as in paragraph **1** further including the step of selectively routing said message to a controllable resource associated with said telecommunications apparatus.
**23**. A method of routing messages in a telecommunications apparatus, the method comprising the steps of:
   a) receiving a message from at least one source; and
   b) selectively routing said message to destinations according to a pre-defined message routing scheme selected in response to a property of said message.
**24**. A method as in paragraph **23** further including the step of identifying the source of said message.
**25**. A method as in paragraph **24** further including the step of associating respective message receiving ports with respective sources.
**26**. A method as in paragraph **25** further including the step of identifying which of said sources is the source of a message received at said multiple resource telecommunications apparatus by determining which of said message receiving ports has received said message.
**27**. A method as in paragraph **26** further including the step of associating respective message routing schemes with corresponding sources of messages.
**28**. A method as in paragraph **27** wherein the step of routing messages includes the step of interpreting a pre-defined portion of said message to select one of said message routing schemes.
**29**. A method as in paragraph **27** further including the step of programming a router with at least one of said message routing schemes in response to receipt of a pre-defined message.
**30**. A method as in paragraph **27** further including the step of determining from said routing scheme, at least one recipient of said message.
**31**. A method as in paragraph **23** further including the step of controlling with said message a user interface associated with said multiple resource telecommunications apparatus.
**32**. A method as in paragraph **23** further including the step of controlling with said message input and output devices associated with said multiple resource telecommunications apparatus.
**33**. A method as in paragraph **23** further including the step of receiving messages from common equipment.
**34**. A method as in paragraph **33** further including the step of programming a router with at least one of said message routing schemes in response to a message received from the common equipment.
**35**. A method as in paragraph **23** further including the step of receiving a message from a resource controller.
**36**. A method as in paragraph **25** further including the step of programming a router with at least one of said message routing schemes in response to a message received from the resource controller.
**37**. A method as in paragraph **23** further including the step of controlling a plurality of controllable resources.
**38**. A method as in paragraph **23** further including the step of transmitting messages to said at least one other resource controller.
**39**. An audio signal router comprising:
   a) a plurality of audio input ports for receiving audio signals from a plurality of audio sources;
   b) a plurality of audio output ports for providing audio signals to a plurality of audio receivers; and
   c) a router for routing audio signals appearing at specific audio ports to define at least one audio channel and for providing signals appearing on said at least one audio channel to at least one audio output port.
**40**. A telecommunications system, comprising:
   a) a controllable resource;
   b) a first resource controller for selectively controlling said resource;
   c) a second resource controller for selectively controlling said resource;
   d) a receiver for receiving a message from said first resource controller; and
   e) a router for selectively routing said message to said second resource controller and to said controllable resource, according to a routing scheme dependent upon a property of said message.
**41**. A system as in paragraph **40** further including a parser for parsing as said property of said message at least a portion of the content of said message.
**42**. A system as in paragraph **40** further including a detector for detecting as said property of said message the source of said message.
**43**. A system as in paragraph **40** further including a detector for detecting which of said resource controllers is the source of said message.
**44**. A system as in paragraph **43** wherein said detector is operable to associate respective message receiving ports with said resource controllers respectively.
**45**. A system as in paragraph **44** wherein said detector is operable to detect which of said resource controllers is the source of a message received at said telecommunications system by determining which of said message receiving ports has received said message.
**46**. A system as in paragraph **45** wherein said router is operable to route said messages by associating respective message routing schemes with corresponding sources of messages.
**47**. A system as in paragraph **46** wherein said router includes a parser for parsing a pre-defined portion of said message to determine message routing within one of said message routing schemes.
**48**. A system as in paragraph **46** wherein said router is programmable with at least one of said message routing schemes in response to receipt of a pre-defined message.
**49**. A system as in paragraph **46** wherein said routing scheme includes at least one recipient of said message.
**50**. A system as in paragraph **40** further including a bus controller for detecting the addition of a new resource controller to said telecommunications system.
**51**. A system as in paragraph **50** wherein said bus controller is operable to identify said at least one new resource controller to said telecommunications system.
**52**. A system as in paragraph **51** wherein said router is programmable to include said new resource controller in said routing scheme.
**53**. A system as in paragraph **52** further including an identifier for identifying one resource controller in said system as a master resource controller.
**54**. A system as in paragraph **53** wherein said bus controller is operable to identify said new resource controller to said master resource controller and said master resource controller is operable to transmit a pre-defined message to said telecommunications system to program said router with a routing scheme.
**55**. A system as in paragraph **54** wherein said master resource controller is operable to transmit an indication of access rights to said new resource controller.
**56**. A system as in paragraph **55**, wherein said master controller is operable to prevent any other resource controller from transmitting a predefined message to program said router with a routing scheme.
**57**. A system as in paragraph **56**, wherein said master controller is operable to prevent any other resource controller from transmitting an indication of access rights to a new resource controller.
**58**. A system as in paragraph **40** further including an identifier for identifying at said multiple resource telecommunications system one resource controller as a master resource controller.
**59**. A system as in paragraph **58** further including a bus controller for identifying at said multiple resource telecommunications system each resource controller in said system.
**60**. A system as in paragraph **59** wherein said router is programmable with a routing scheme in response to a pre-defined message received from said master resource controller.
**61**. A system as in paragraph **60** wherein said identifier is operable to redefine the identification of said master resource controller in response to a pre-defined message received from said master resource controller.
**62**. A telecommunications apparatus for connection to a telecommunication system, the telecommunication system having a first resource controller for selectively controlling a controllable resource, comprising:
   a) a second resource controller for selectively controlling a controllable resource;
   b) a controllable resource selectively controllable by each of the first resource controller and said second resource controller;
   c) a receiver for receiving messages from each of the first resource controller and said second resource controller; and
   d) a router for selectively routing said messages to one of the first resource controller, to said second resource controller and to said controllable resource, according to a routing scheme dependent upon a property of said message.
**63**. An apparatus as in paragraph **62** further including a detector for detecting the source of said message.
**64**. An apparatus as in paragraph **63** wherein said receiver includes a first port connectable to the first resource controller and a second port connectable to said second resource controller and wherein said detector is operable to associate respective message receiving ports with respective message sources.
**65**. An apparatus as in paragraph **64** wherein said detector is operable to identify which of said sources is the source of a message received at said multiple resource telecommunications apparatus by determining which of said message receiving ports has received said message.
**66**. An apparatus as in paragraph **65** wherein said router is operable to associate respective message routing schemes with corresponding sources of messages.
**67**. An apparatus as in paragraph **66** wherein said router further includes a message parser for parsing a pre-defined portion of said message to select one of said message routing schemes.
**68**. An apparatus as in paragraph **66** wherein said router is programmable with at least one of said message routing schemes in response to receipt of a pre-defined message.
**69**. An apparatus as in paragraph **66** wherein said router is operable to determine from said routing scheme at least one recipient of said message.
**70**. An apparatus as in paragraph **62** wherein said controllable resource includes a user interface.
**71**. An apparatus as in paragraph **62** wherein said user interface includes input and output devices.
**72**. An apparatus as in paragraph **62** wherein said receiver is operable to receive messages from common equipment.
**73**. An apparatus as in paragraph **72** wherein said router is programmed to define said routing scheme in response to messages received from said common equipment.
**74**. An apparatus as in paragraph **62** wherein said router is programmed in response to messages received from one of the first resource controller and said second resource controller.
**75**. An apparatus as in paragraph **74** wherein said router is programmed to define said routing scheme in response to messages received from one of the first resource controller and said second resource controller.
**76**. An apparatus as in paragraph **62** further including a plurality of controllable resources.
**77**. An apparatus as in paragraph **62** further including a transmitter for transmitting messages to the first resource controller.
**78**. A resource controller apparatus for connection to a telecommunications apparatus, the telecommunication apparatus having a controllable resource and being connectable to a telecommunication system having a master resource controller, comprising:
   a) a receiver for receiving messages from the telecommunications apparatus and the master resource controller;
   b) a transmitter for selectively transmitting messages to the telecommunications apparatus and the master resource controller; and
   c) a router for selectively routing the transmitted and received messages to the telecommunications apparatus and the master resource controller, according to a routing scheme dependent upon a property of said message.
**79**. An apparatus as in paragraph **78** wherein said router further includes a detector for detecting the source of a received message.
**80**. An apparatus as in paragraph **79** wherein said detector further includes a message parser for parsing a pre-defined portion of said message for detecting the source of a received message.
**81**. An apparatus as in paragraph **80** wherein said router is programmable with at least one of said message routing schemes in response to receipt of a pre-defined message.
**82**. An apparatus as in paragraph **81** wherein said router is programmable with at least one of said message routing schemes in response to receipt of a pre-defined message from the master resource controller.
**83**. An apparatus as in paragraph **82** wherein said router is operable to determine from said routing scheme at least one recipient of said message.
**84**. An apparatus as in paragraph **78** wherein said transmitter further includes a packager for encoding in a pre-defined portion of a message an message source identifier.
**85**. An apparatus as in paragraph **84** wherein said packager is operable to encode a message source identifier that identifies the message source as the resource controller apparatus.
**86**. An apparatus as in paragraph **84** wherein said packager is operable to encode a message source identifier that identifies the message source as the master resource controller.
**87**. An apparatus as in paragraph **84** wherein said packager is operable to encode a message source identifier that identifies the message source as the telecommunications apparatus.
**88**. An apparatus as in paragraph **78** wherein said transmitter is operable to transmit to the master resource controller a request to observe the controllable resource.
**89**. An apparatus as in paragraph **78** wherein said transmitter is operable to transmit to the master resource controller a request to control the controllable resource.
**90**. An apparatus as in paragraph **78** wherein said transmitter is operable to transmit to the master resource controller a request for succession to become the new master resource controller.
**91**. A common equipment apparatus for connection to a telecommunications system including both a telecommunications apparatus having a controllable resource and a resource controller, the common equipment apparatus comprising:
   a) a receiver for receiving messages from the telecommunications apparatus and the resource controller;
   b) a transmitter for selectively transmitting messages to the telecommunications apparatus and the resource controller; and
   c) a router for selectively routing the transmitted and received messages to the telecommunications apparatus and the resource controller, according to a routing scheme dependent upon a property of said message.
**92**. An apparatus as in paragraph **91** wherein said router further includes a detector for detecting the source of a received message.
**93**. An apparatus as in paragraph **92** wherein said detector further includes a message parser for parsing a pre-defined portion of said message for detecting the source of a received message.
**94**. An apparatus as in paragraph **93** wherein said router is programmable with at least one of said message routing schemes in response to receipt of a pre-defined message.
**95**. An apparatus as in paragraph **94** wherein said router is programmable with at least one of said message routing schemes in response to receipt of a pre-defined message from the resource controller.
**96**. An apparatus as in paragraph **95** wherein said router is operable to determine from said routing scheme at least one recipient of said message.
**97**. An apparatus as in paragraph **91** wherein said transmitter further includes a packager for encoding in a pre-defined portion of a message an message source identifier.
**98**. An apparatus as in paragraph **97** wherein said packager is operable to encode a message source identifier that identifies the message source as the common equipment apparatus.
**99**. An apparatus as in paragraph **91** further including a processor.
**100**. An apparatus as in paragraph **99** further including a memory storing codes for directing the processor to operate as a master resource controller for controlling the resource controller.
**101**. An apparatus as in paragraph **100** wherein said transmitter is operable to transmit to the resource controller permission to observe the controllable resource.
**102**. An apparatus as in paragraph **100** wherein said transmitter is operable to transmit to the resource controller permission to control the controllable resource.
**103**. An apparatus as in paragraph **100** wherein said transmitter is operable to transmit to the resource controller permission to become a successor master resource controller.
**104**. Means for controlling resources in a telecommunications system having a plurality of controllable resources and a plurality of resource controllers for controlling said resources, comprising:
   a) means for receiving a message from a resource controller at a telecommunications apparatus;
   b) means for selectively routing said message to at least one of said resource controllers and to a controllable resource, according to a routing scheme dependent upon a property of said message.
**105**. Means for routing messages in a telecommunications apparatus, comprising:
   a) means for receiving a message from at least one source; and
   b) means for selectively routing said message to destinations according to a pre-defined message routing scheme selected in response to a property of said message.
**106**. A computer-readable storage medium for directing a processor to perform a process for controlling resources in a telecommunications system having a plurality of controllable resources and a plurality of resource controllers for controlling said resources, the process comprising the steps of:
   a) receiving a message from a resource controller at a telecommunications apparatus;
   b) selectively routing said message to at least one of said resource controllers and to a controllable resource, according to a routing scheme dependent upon a property of said message.
**107**. A computer-readable storage medium for directing a processor to perform a process for routing messages in a telecommunications apparatus, the method comprising the steps of:
   a) receiving a message from at least one source; and
   b) selectively routing said message to destinations according to a pre-defined message routing scheme selected in response to a property of said message.

## Claims

1. A method of controlling resources in a telecommunications system having a plurality of controllable resources and a plurality of resource controllers for controlling said resources, the method comprising the steps of:
a) receiving a message from a resource controller at a telecommunications apparatus;
b) selectively routing said message to at least one of said resource controllers and to a controllable resource, according to a routing scheme dependent upon a property of said message.

2. A method as in paragraph **1** further including the step of determining as said property of said message the source of said message and the content of said message.

3. A method as in paragraph claim **1** further including the step of identifying which of said resource controllers is the source of said message.

4. A method as claimed in claim **3** further including the step of associating respective message receiving ports with said resource controllers respectively.

5. A method as claimed in claim **4** further including the step of identifying which of said resource controllers is the source of a message received at said telecommunications apparatus by determining which of said message receiving ports has received said message.

6. A method as claimed in claim **5** further including the step of associating respective message routing schemes with corresponding sources of messages.

7. A method as claimed in claim **6** wherein the step of routing messages includes the step of interpreting a pre-defined portion of said message to determine message routing within one of said message routing schemes.

8. A method as claimed in claim **6** further including the step of programming a router with at least one of said message routing schemes in response to receipt of a pre-defined message.

9. A method as claimed in claim **6** further including the step of determining from said routing scheme, at least one recipient of said message.

10. A method as claimed in claim **1** further including the step of detecting the addition of a new resource controller to said telecommunications system.

11. A method as claimed in claim **10** further including the step of programming a router programmed with at least one of said message routing schemes to include said new resource controller in said routing scheme.

12. A method as claimed in claim **11** further including the step of identifying said at least one new resource controller to said telecommunications apparatus.

13. A method as claimed in claim **12** further including the step of identifying one resource controller in said system as a master resource controller.

14. A method as claimed in claim **13** further including the step of identifying said new resource controller to said master resource controller and transmitting a pre-defined message from said master resource controller to said telecommunications apparatus to program said router with a routing scheme.

15. A method as claimed in claim **14** further including the step of transmitting an indication of access rights from said master resource controller to said new resource controller.

16. A method as claimed in claim **15**, further including the step of preventing any resource controller other than said master controller from transmitting a predefined message to programming said router with a routing scheme.

17. A method as claimed in claim **16**, further including the step of preventing any resource controller other than said master resource controller from transmitting an indication of access rights to a new resource controller.

18. A method as claimed in claim **1** further including the step of identifying at said multiple resource telecommunications apparatus at least one resource controller as a master resource controller.

19. A method as claimed in claim **18** further including the step of identifying at said multiple resource telecommunications apparatus each resource controller in said system.

20. A method as claimed in claim **19** further including the step of programming a router with a routing scheme in response to a pre-defined message received from said master resource controller.

21. A method as claimed in claim **20** further including the step of re-defining the identification of said master resource controller in response to a pre-defined message received from said master resource controller.

22. A method as claimed in claim **1** further including the step of selectively routing said message to a controllable resource associated with said telecommunications apparatus.

23. A method of routing messages in a telecommunications apparatus, the method comprising the steps of:
a) receiving a message from at least one source; and
b) selectively routing said message to destinations according to a pre-defined message routing scheme selected in response to a property of said message.

24. An audio signal router comprising:
a) a plurality of audio input ports for receiving audio signals from a plurality of audio sources;
b) a plurality of audio output ports for providing audio signals to a plurality of audio receivers; and
c) a router for routing audio signals appearing at specific audio ports to define at least one audio channel and for providing signals appearing on said at least one audio channel to at least one audio output port.

25. A telecommunications system, comprising:
a) a controllable resource;
b) a first resource controller for selectively controlling said resource;
c) a second resource controller for selectively controlling said resource;
d) a receiver for receiving a message from said first resource controller; and
e) a router for selectively routing said message to said second resource controller and to said controllable resource, according to a routing scheme dependent upon a property of said message.

26. A telecommunications apparatus for connection to a telecommunication system, the telecommunication system having a first resource controller for selectively controlling a controllable resource, comprising:
a) a second resource controller for selectively controlling a controllable resource;
b) a controllable resource selectively controllable by each of the first resource controller and said second resource controller;
c) a receiver for receiving messages from each of the first resource controller and said second resource controller; and
d) a router for selectively routing said messages to one of the first resource controller, to said second resource controller and to said controllable resource, according to a routing scheme dependent upon a property of said message.

27. A resource controller apparatus for connection to a telecommunications apparatus, the telecommunication apparatus having a controllable resource and being connectable to a telecommunication system having a master resource controller, comprising:
a) a receiver for receiving messages from the telecommunications apparatus and the master resource controller;
b) a transmitter for selectively transmitting messages to the telecommunications apparatus and the master resource controller; and
c) a router for selectively routing the transmitted and received messages to the telecommunications apparatus and the master resource controller, according to a routing scheme dependent upon a property of said message.

28. A common equipment apparatus for connection to a telecommunications system including both a telecommunications apparatus having a controllable resource and a resource controller, the common equipment apparatus comprising:
a) a receiver for receiving messages from the telecommunications apparatus and the resource controller;
b) a transmitter for selectively transmitting messages to the telecommunications apparatus and the resource controller; and
c) a router for selectively routing the transmitted and received messages to the telecommunications apparatus and the resource controller, according to a routing scheme dependent upon a property of said message.

29. Means for controlling resources in a telecommunications system having a plurality of controllable resources and a plurality of resource controllers for controlling said resources, comprising:
a) means for receiving a message from a resource controller at a telecommunications apparatus;
b) means for selectively routing said message to at least one of said resource controllers and to a controllable resource, according to a routing scheme dependent upon a property of said message.

30. Means for routing messages in a telecommunications apparatus, comprising:
a) means for receiving a message from at least one source; and
b) means for selectively routing said message to destinations according to a pre-defined message routing scheme selected in response to a property of said message.

31. A computer-readable storage medium for directing a processor to perform a process for controlling resources in a telecommunications system having a plurality of controllable resources and a plurality of resource controllers for controlling said resources, the process comprising the steps of:
a) receiving a message from a resource controller at a telecommunications apparatus;
b) selectively routing said message to at least one of said resource controllers and to a controllable resource, according to a routing scheme dependent upon a property of said message.

32. A computer-readable storage medium for directing a processor to perform a process for routing messages in a telecommunications apparatus, the method comprising the steps of:
a) receiving a message from at least one source; and
b) selectively routing said message to destinations according to a pre-defined message routing scheme selected in response to a property of said message.
